# EUROPEAN PATENT SPECIFICATION

(11) **EP 2 455 220 B1**
(45) Date of publication and mention of the grant of the patent: **25.11.2015**
(21) Application number: 10799607.6
(22) Date of filing: 12.07.2010
(51) Int. Cl.: C09D 183/16, C08J 7/04, C08G 77/62

(54) **LAMINATE AND PROCESS FOR PRODUCTION THEREOF**
LAMINAT UND HERSTELLUNGSVERFAHREN DAFÜR
STRATIFIÉ ET PROCÉDÉ POUR SA PRODUCTION

(30) Priority: 17.07.2009 JP 2009169014; 09.09.2009 JP 2009207775
(43) Date of publication of application: 23.05.2012
(73) Proprietor: Mitsui Chemicals, Inc., Tokyo 105-7117 (JP)
(72) Inventor: TAKAKI, Toshihiko, Sodegaura-shi Chiba 299-0265 (JP); FUKUMOTO, Haruhiko, Sodegaura-shi Chiba 299-0265 (JP)
(74) Representative: Hoffmann Eitle
(86) International application number: PCT/JP2010/004510
(87) International publication number: WO 2011/007543

(56) References cited:
- EP-A1- 2 028 215
- JP-A- 2000 221 302
- JP-A- 2003 118 030
- JP-A- 2007 237 588

## Description

### TECHNICAL FIELD

The present invention relates to a multilayered material and a production method thereof.

### BACKGROUND ART

Recently, for blocking gases such as oxygen or water vapor, transparent gas-barrier materials become to be used in members (such as substrates and back sheets) of flat panel displays (FPD) such as liquid crystal displays or solar cells, flexible substrates or sealing films of organic electroluminescence (organic EL) devices, in addition to traditional main use such as packaging materials of food and medicines. Such applications require a very high gas barrier property.

The transparent gas-barrier materials currently employed in some uses are produced by a dry method such as a plasma CVD method, a sputtering method, an ion plating method and a wet method such as a sol-gel method. Both methods are techniques of depositing silicon oxide (silica) exhibiting a gas barrier property on a plastic substrate. Since the wet method does not require large-scale equipment, is not affected by surface roughness of the substrate, and forms no pinhole, in comparison with the dry method, the wet method is gaining attention as a technique capable of acquiring a uniform gas-barrier film with high reproducibility.

As one wet method, a method of converting a polysilazane film coated on a substrate to silica is disclosed in NON-PATENT DOCUMENT 1. It is widely known that polysilazane is converted to silicon oxide (silica) through oxidation or hydrolysis and dehydration polycondensation by heating (150 to 450°C) in the presence of oxygen or water vapor. However, this method has a problem that it takes much time to form silica and a problem that the substrate can not be prevented deterioration by exposing to a high temperature.

On the other hand, Patent Document 1 and Patent Document 2 disclose a method, which is comprised of applying a coating solution containing polysilazane to a substrate to form a polysilazane film and then performing a plasma oxidation process, which is generally called a plasma oxidation method and uses air or oxygen gas as a suitable plasma gas species, to the polysilazane film. These documents describe the polysilazane film can be converted to silica at a low temperature over a relatively short time by using this method.

However, an inorganic polymer layer described in Patent Document 1 is a layer disposed as an intermediate layer between the substrate and the metal vapor-deposited layer to impart adhesion to the metal vapor-deposited layer and chemical stability to the substrate. Therefore, the present invention described in Patent Document 1 does not impart a gas barrier property to the polysilazane layer itself. As described in an example of Patent Document 1, in a technique generally called a corona process using air as a plasma species, the obtained inorganic polymer layer does not exhibit a satisfactory gas barrier property. There is also a problem in that abrasion resistance thereof is not good.

The invention described in Patent Document 2 relates to a method of producing a gas-barrier film by performing a plasma process on a polysilazane film and more particularly, to a technique of producing silicon oxide (silica) by the above-mentioned oxygen plasma process. The gas barrier property required in uses such as members of an FPD or solar cells and flexible substrates and sealing films of organic EL devices is a level which is difficult to realize in a silicon oxide (silica) single film. Accordingly, the film described in the patent document has room for improvement in the gas barrier property for applying in such uses.

Accordingly, the gas-barrier films described in Patent Document 1 and Patent Document 2 still have problems to be solved in the gas barrier property against oxygen and water vapor and, the abrasion resistance.

In addition, a high-refractive-index resin such as a diethylene glycol bisallylcarbonate resin or a polythiourethane resin is used in a plastic spectacles lens or the like. The high-refractive-index resin has a defect that abrasion resistance is poor and thus the surface thereof easily tends to scar. Accordingly, a method of forming a hard coating film on the surface thereof is carried out. For the same reason, a hard coating film is required to be formed on the surfaces of polarizing plates used in various displays of a word processor, a computer, a television and liquid crystal display devices and the surfaces of optical lenses such as a lens of a camera view finder, covers of various meters, and the surfaces of glass windows of automobiles and electric trains. In the hard coating film, a silica sol having ultrafine particles added thereto and a coating solution using organic silicon compounds are mainly used to impart a high refractive index.

However, in such a coating solution, it is necessary to match the refractive indices of the substrate and the coating film with each other so as to suppress occurrence of moirés. In this case, it is necessary to select the optimal particles out of various particles for addition depending on the type of the substrate. There is room for improvement in abrasion resistance and thus a thickness of several µm or more is required to impart the abrasion resistance.

On the other hand, Patent Document 3 discloses a method of forming a silicon nitride thin film, in which perhydropolysilazane or denatured products thereof are applied to a substrate and then the resultant is fired at a temperature of 600°C or higher. It is described that the resultant silicon nitride thin film is excellent in abrasion resistance, heat resistance, corrosion resistance, and chemical resistance and has a high refractive index.

However, the technique described in Patent Document 3 has room for improvement in the following points.

In the method described in Patent Document 3, it is necessary to fire the polysilazane film at a high temperature of 600°C or higher. Accordingly, when the silicon nitride film is formed on the surface of an optical member, the optical member itself is exposed to the high temperature and thus the method described in the patent document is not usable to an optical application requiring precision. On the other hand, when the polysilazane film is heated at a temperature lower than 600°C, polysilazane is converted to low-refractive-index silica and thus a high-refractive-index film cannot be obtained. In the method described in Patent Document 3, it is difficult to free control the refractive index depending on applications.

Patent Document 4 describes a method for manufacturing a multilayer wiring device and a semiconductor device comprising forming a porous insulating film precursor layer on or over a substrate; forming a layer of a specific silicon compound, and exposing the porous insulating film precursor to UV in vacuo, under reduced or under normal pressure through the silicon compound layer.

### RELATED DOCUMENT

### PATENT DOCUMENT

[Patent Document 1] JP-A-H8-269690
[Patent Document 2] JP-A-2007-237588
[Patent Document 3] JP-A-H10-194873
[Patent Document 4] EP 2 028 215 A1

### NON-PATENT DOCUMENT

[Non-Patent Document 1] "Coating and Paint", vol. 569, No. 11, P27-P33 (1997)
[Non-Patent Document 2] "Thin Solid Films", vol. 515, P3480-P3487, F. Rebib et al. (2007)

### DISCLOSURE OF THE INVENTION

According to the present invention, it is provided a multilayered material comprising: a substrate; and a silicon-containing film formed on the substrate, wherein the silicon-containing film has a nitrogen-rich area including "silicon atoms and nitrogen atoms" or "silicon atoms, nitrogen atoms and oxygen atoms", wherein the nitrogen-rich area is formed by irradiating a polysilazane film formed on the substrate with an energy beam performed by plasma irradiation or ultraviolet irradiation in an atmosphere in which the oxygen concentration is equal to or less than 0.5% or the relative humidity is equal to or less than 0.5%, and denaturing at least a part of the polysilazane film.

In the multilayered material according to the present invention, the composition ratio of the nitrogen atoms to the total atoms, which is measured by X-ray photoelectron spectroscopy and is evaluated by the following formula, in the nitrogen-rich area may be 0.1 to 0.5.

Formula: composition ratio of nitrogen atoms/ (composition ratio of silicon atoms+composition ratio of oxygen atoms+composition ratio of nitrogen atoms)

In the multilayered material according to an embodiment of the present invention, the refractive index of the silicon-containing film may be equal to or more than 1.55.

In the multilayered material according to an embodiment of the present invention, the composition of the nitrogen atoms to the total atoms, which is measured by X-ray photoelectron spectroscopy, in the nitrogen-rich area may be 1 to 57 atom%.

In the multilayered material according to an embodiment of the present invention, the nitrogen-rich area maybe formed on the entire surface of the silicon-containing film.

In the multilayered material according to an embodiment of the present invention, the nitrogen-rich area may have a thickness of 0.01 µm to 0.2 µm.

In the multilayered material according to an embodiment of the present invention, the composition ratio of the nitrogen atoms to the total atoms, which is measured by X-ray photoelectron spectroscopy, in the silicon-containing film may be higher on the top side of the silicon-containing film than on the other side thereof.

In the multilayered material according to an embodiment of the present invention, the water vapor transmission rate of the silicon-containing film, which is measured on the basis of JIS K7129, with a thickness of 0.1 µm, at 40°C and 90 RH% may be equal to or less than 0.01 g/m²·day.

In the multilayered material according to the present invention, the irradiation with an energy beam may be performed by plasma irradiation or ultraviolet irradiation.

In the multilayered material according to an embodiment of the present invention, a working gas used in the plasma irradiation or ultraviolet irradiation is an inert gas, a rare gas, or a reducing gas.

In the multilayered material according to an embodiment of the present invention, the working gas is selected from a nitrogen gas, an argon gas, a helium gas, a hydrogen gas, or a mixed gas thereof.

In the multilayered material according to an embodiment of the present invention, the plasma irradiation or ultraviolet irradiation may be performed under vacuum.

In the multilayered material according to an embodiment of the present invention, the plasma irradiation or ultraviolet irradiation may be performed under ordinary pressure.

In the multilayered material according to an embodiment of the present invention, the polysilazane film may be comprised of at least one kind selected from the group consisting of perhydropolysilazane, organopolysilazane, and derivatives thereof.

In the multilayered material according to an embodiment of the present invention, the substrate may be a resin film.

In the multilayered material according to an embodiment of the present invention, the resin film may be comprised of at least one kind of resins selected from the group consisting of polyolefin, cyclic olefin polymer, polyvinyl alcohol, ethylene-vinyl alcohol copolymer, polystyrene, polyester, polyamide, polycarbonate, polyvinyl chloride, polyvinylidene chloride, polyimide, polyether sulfone, polyacryl, polyarylate, and triacetylcellulose.

The multilayered material according to an embodiment of the present invention may further include a vapor-deposited film on the top surface of the silicon-containing film or between the substrate and the silicon-containing film.

In the multilayered material according to an embodiment of the present invention, the vapor-deposited film may include as a major component an oxide, a nitride, or an oxynitride of at least one kind of metal selected from the group consisting of Si, Ta, Nb, Al, In, W, Sn, Zn, Ti, Cu, Ce, Ca, Na, B, Pb, Mg, P, Ba, Ge, Li, K, Zr, and Sb.

In the multilayered material according to an embodiment of the present invention, the vapor-deposited film may be formed by a physical vapor deposition method (a PVD method) or a chemical vapor deposition method (a CVD method).

In the multilayered material according to an embodiment of the present invention, the vapor-deposited film may have a thickness of 1 nm to 1000 nm.

In the multilayered material according to an embodiment of the present invention, the silicon-containing film may have a thickness of 0.02 µm to 2 µm.

In the multilayered material according to an embodiment of the present invention, the nitrogen-rich area may include silicon nitride and/or silicon oxynitride.

The multilayered material according to an embodiment of the present invention may have a thickness of 0.02 µm to 2 µm.

In the multilayered material according to an embodiment of the present invention, the substrate may be an optical member.

The multilayered material according to an embodiment of the present invention may be a gas-barrier film.

The multilayered material according to an embodiment of the present invention may be a high-refractive-index film.

According to another aspect of the present invention, there is provided a method of producing a multilayered material, including the steps of: coating a substrate with a polysilazane-containing solution to form a coating film; drying the coating film under a low-moisture atmosphere to form a polysilazane film; and irradiating the polysilazane film with an energy beam performed by plasma irradiation or ultraviolet irradiation under an atmosphere in which the oxygen concentration is equal to or less than 0.5% or the relative humidity is equal to or less than 0.5%, and denaturing at least a part of the polysilazane film to form a silicon-containing film including a nitrogen-rich area including "silicon atoms and nitrogen atoms" or "silicon atoms, nitrogen atoms and oxygen atoms".

In the method according to the present invention, the composition ratio of the nitrogen atoms to the total atoms, which is measured by X-ray photoelectron spectroscopy and is evaluated by the following formula, in the nitrogen-rich area may be 0.1 to 1. $composition ratio of nitrogen atoms / \left(composition ratio of oxygen atoms+composition ratio of nitrogen atoms\right)$

In the method according to an embodiment of the present invention, the composition ratio of the nitrogen atoms to the total atoms, which is measured by X-ray photoelectron spectroscopy and is evaluated by the following formula, in the nitrogen-rich area may be 0.1 to 0.5. $composition ratio of nitrogen atoms / \left(composition ratio of silicon atoms+composition ratio of oxygen atoms+composition ratio of nitrogen atoms\right)$

In the method according to an embodiment of the present invention, the refractive index of the silicon-containing film may be equal to or more than 1.55.

In the method according to the present invention, the irradiation with an energy beam in the step of forming the silicon-containing film may be plasma irradiation or ultraviolet irradiation.

In the method according to an embodiment of the present invention, a working gas used in the plasma irradiation or ultraviolet irradiation is an inert gas, a rare gas, or a reducing gas.

In the method according to an embodiment of the present invention, the working gas is selected from a nitrogen gas, an argon gas, a helium gas, a hydrogen gas, or a mixed gas thereof.

In the method according to an embodiment of the present invention, the plasma irradiation or ultraviolet irradiation may be performed under vacuum.

In the method according to an embodiment of the present invention, the plasma irradiation or ultraviolet irradiation may be performed under ordinary pressure.

In the method according to an embodiment of the present invention, the polysilazane film may be comprised of at least one kind selected from the group consisting of perhydropolysilazane, organopolysilazane, and derivatives thereof.

In the method according to an embodiment of the present invention, the substrate may be a resin film.

In the method according to an embodiment of the present invention, the resin film may be comprised of at least one kind of resin selected from the group consisting of polyolefin, cyclic olefin polymer, polyvinyl alcohol, ethylene-vinyl alcohol copolymer, polystyrene, polyester, polyamide, polycarbonate, polyvinyl chloride, polyvinylidene chloride, polyimide, polyether sulfone, polyacryl, polyarylate, and triacetylcellulose.

The method according to an embodiment of the present invention may further include a step of forming a vapor-deposited film on the substrate before the step of forming the polysilazane film on the substrate.

The method according to an embodiment of the present invention may further include a step of forming a vapor-deposited film on the silicon-containing film after the step of forming the silicon-containing film.

In the method according to an embodiment of the present invention, the vapor-deposited film may include as a major component an oxide, a nitride, or an oxynitride of at least one kind of metal selected from the group consisting of Si, Ta, Nb, Al, In, W, Sn, Zn, Ti, Cu, Ce, Ca, Na, B, Pb, Mg, P, Ba, Ge, Li, K, Zr, and Sb.

In the method according to an embodiment of the present invention, the step of forming the vapor-deposited film may be step of forming the vapor-deposited film by a physical vapor deposition method (a PVD method) or a chemical vapor deposition method (a CVD method).

In the method according to an embodiment of the present invention, the vapor-deposited film may have a thickness of 1 nm to 1000 nm.

Since the multilayered material according to the present invention includes the nitrogen-rich area which is formed by irradiating a polysilazane film with an energy beam and denaturing at least a part of the polysilazane film and which has "silicon atoms and nitrogen atoms" or "silicon atoms, nitrogen atoms and oxygen atoms", the multilayered material has a high refractive index and is superior in abrasion resistance, transparency, and adhesion to a substrate. The multilayered material according to the present invention can be used as a high-refractive-index film which has superior productivity and superior characteristic stability.

The multilayered material according to the present invention is superior in a gas barrier property such as a water-vapor barrier property or an oxygen barrier property and abrasion resistance, compared with a gas-barrier film according to the related art.

Since the method of producing a multilayered material according to the present invention can reduce an influence on precision of an optical member, it is possible to produce a multilayered material suitable for an optical application. The method of producing a multilayered material according to the present invention is simple, superior in productivity, and superior in refractive index controllability.

### BRIEF DESCRIPTION OF THE DRAWINGS

Fig. 1 is a sectional view illustrating a method of producing a multilayered material according to the present invention.
Fig. 2 is a sectional view illustrating an example of a multilayered material according to the present invention.
Fig. 3 is a sectional view illustrating another example of the multilayered material according to the present invention.
Fig. 4 is a chart illustrating the measurement result of a silicon-containing film of a multilayered material obtained in Example 6 using an X-ray photoelectron spectroscopy (XPS) method.
Fig. 5 is a chart illustrating the measurement result of a silicon-containing film of a multilayered material obtained in Example 1 using an FT-IR method.

### DESCRIPTION OF EMBODIMENTS

Hereinafter, an embodiment of the present invention will be described with reference to the accompanying drawings. In the drawings, like elements are referenced by like reference signs and the description thereof will not be repeated.

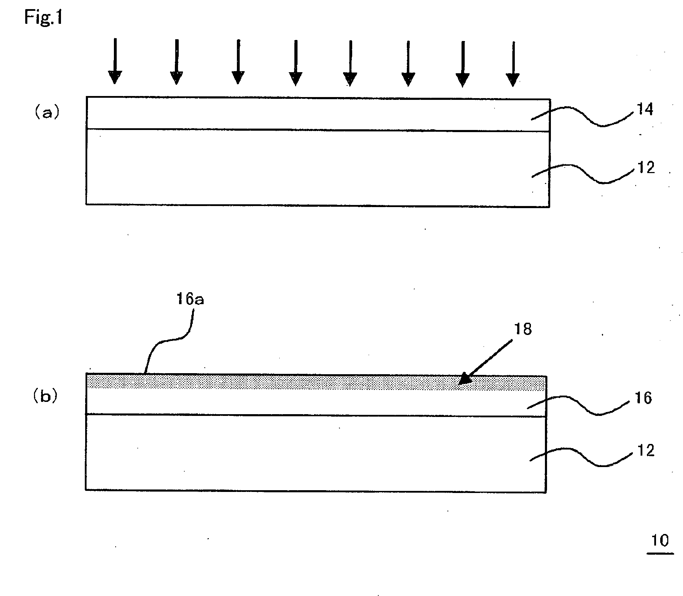

A multilayered material 10 according to present embodiment includes a substrate 12 and a silicon-containing film 16 formed on the substrate 12, as shown in Fig. 1 (b). The silicon-containing film 16 has a nitrogen-rich area 18 including "silicon atoms and nitrogen atoms" or "silicon atoms, nitrogen atoms and oxygen atoms". The nitrogen-rich area 18 is formed by irradiating a polysilazane film 14 formed on the substrate 12 with an energy beam (Fig. 1(a)) and denaturing at least a part of the polysilazane film 14.

Elements of the multilayered material 10 according to the present invention will be described below.

### (Substrate)

A metal plate comprised of silicon or the like, a glass plate, a ceramic plate, and a resin film can be used as the material of the substrate 12. In present embodiment, a resin film is used as the substrate 12.

Examples of the resin film include polyolefins such as polyethylene, polypropylene, and polybutene; cyclic olefin polymers such as APEL (registered trademark); polyvinyl alcohol; ethylene-vinyl alcohol copolymer; polystyrene; polyesters such as polyethylene terephthalate, polybutylene terephthalate, and polyethylene naphthalate; polyamides such as nylon-6 and nylon-11; polycarbonate; polyvinyl chloride; polyvinylidene chloride; polyimide; polyether sulfone; polyacryl; polyallylate; and triacetyl cellulose. These may be used singly or in combination of two or more.

The thickness of the substrate 12 can be appropriately selected depending on applications thereof.

### (Silicon-containing Film)

The silicon-containing film 16 is obtained by irradiating the polysilazane film 14 formed on the substrate 12 with an energy beam in an atmosphere not substantially including oxygen or water vapor and thereby denaturing at least a part of the polysilazane film 14 to form the nitrogen-rich area 18. Accordingly, the silicon-containing film 16 has the nitrogen-rich area 18 in the vicinity of the top surface 16a (Fig. 1(b)). In present embodiment, the "vicinity of the top surface 16a" means an area having 50 nm deep from the top surface 16a of the silicon-containing film 16 and preferably an area having 30 nm deep from the top surface 16a.

Here, the nitrogen-rich area in this specification means an area of which the composition ratio of nitrogen atoms evaluated by the following formula is 0.1 to 0.5.

Composition ratio of nitrogen atoms/(composition ratio of silicon atoms+composition ratio of oxygen atoms+composition ratio of nitrogen atoms)

The nitrogen-rich area 18 has preferably a thickness of 0.01 µm to 0.2 µm and more preferably a thickness of 0.01 µm to 0.1 µm.

The silicon-containing film 16 including the nitrogen-rich area 18 has preferably a thickness of 0.02 µm to 2.0 µm and more preferably a thickness of 0.05 µm to 1.0 µm.

The silicon-containing film 16 according to the present invention includes the nitrogen-rich area 18 which is formed by irradiating the polysilazane film 14 with an energy beam in the atmosphere not substantially including oxygen or water vapor. The part other than the nitrogen-rich area 18 in the silicon-containing film 16 can react with water vapor permeated from the resin substrate side and can be changed to silicon oxide, after the irradiation with an energy beam.

That is, the silicon-containing film 16 includes the nitrogen-rich area 18 and a silicon oxide area. Due to the configuration of the nitrogen-rich area/silicon oxide/resin substrate, the gas barrier property such as an oxygen barrier property and a water-vapor barrier property and mechanical characteristics such as a hard coating property of the silicon-containing film 16 are superior to a single-layered film of SiO₂, Si₃N₄, or the like.

The silicon-containing film 16 preferably includes SiO₂, SiNH₃, or SiOₓN_{y}.

An example where the thickness of the silicon-containing film 16 is 0.5 µm and the nitrogen-rich area 18 is formed all over the vicinity of the top surface 16a of the silicon-containing film 16 is described in present embodiment, but the nitrogen-rich area 18 may be formed in a part of the vicinity of the top surface of the silicon-containing film 16.

The nitrogen-rich area 18 may be formed in the entire silicon-containing film 16. In this case, the composition of the silicon-containing film 16 is the same as the nitrogen-rich area 18.

The nitrogen-rich area 18 includes at least silicon atoms and nitrogen atoms or includes at least silicon atoms, nitrogen atoms, and oxygen atoms. In present embodiment, the nitrogen-rich area 18 includes Si₃N₄, or SiOₓN_{y}.

The composition ratio of the nitrogen atoms to the total atoms, which is measured by X-ray photoelectron spectroscopy, of the nitrogen-rich area 18 is 0.1 to 1 in the following formula and preferably 0.14 to 1. $composition ratio of nitrogen atoms / \left(composition ratio of oxygen atoms+composition ratio of nitrogen atoms\right)$

Alternatively, the composition ratio of the nitrogen atoms to the total atoms, which is measured by X-ray photoelectron spectroscopy, of the nitrogen-rich area 18 is 0.1 to 0.5 in the following formula and preferably 0.1 to 0.4. $composition ratio of nitrogen atoms / \left(composition ratio of silicon atoms+composition ratio of oxygen atoms+composition ratio of nitrogen atoms\right)$

The multilayered material 10 including the nitrogen-rich area 18 having such a composition is particularly superior in gas barrier properties such as an oxygen barrier property and a water-vapor barrier property and mechanical properties such as abrasion resistance. That is, since it includes the nitrogen-rich area 18 having such a composition, the multilayered material 10 is excellent in an improvement in balance between the gas barrier properties and the mechanical properties.

From the viewpoint of the balance between the gas barrier properties and the mechanical properties, the composition ratio of the nitrogen atoms to the total atoms, which is measured by the X-ray photoelectron spectroscopy, of the nitrogen-rich area 18 is 1 to 57 atom% and preferably 10 to 57 atom%.

From the viewpoint of improvement of the gas barrier properties, the composition ratio of the nitrogen atoms to the total atoms, which is measured by the X-ray photoelectron spectroscopy, in the silicon-containing film 16 is preferably higher on the top surface 16a side of the silicon-containing film than on the other surface side thereof.

The atom composition gradually varies between the silicon-containing film 16 and the nitrogen-rich area 18. Since the composition continuously varies in this way, the mechanical properties are improved along with the gas barrier properties.

In the multilayered material 10 according to present embodiment, the water vapor transmission rate measured under the following conditions (JIS K7129) is equal to or less than 0.01g/m²·day.
- Thickness of silicon-containing Film 16: 0.1 µm
- Temperature of 40°C and humidity of 90%

The water-vapor barrier property of the multilayered material according to the present invention is exhibited by forming the nitrogen-rich area. Accordingly, when the thickness of the nitrogen-rich area is equal to or more than 0.01 µm, the water-vapor barrier property of equal to or less than 0.01g/m²·day is exhibited. However, in terms of actual situations of coating techniques, a reproducible and stable water-vapor barrier property is obtained with a thickness of 0.1 µm. When the thickness is equal to or more than 0.1 µm, a higher water-vapor barrier property is exhibited.

The silicon-containing film according to present embodiment preferably has a refractive index of equal to or more than 1.55.

### (Method of Producing Multilayered material)

A method of producing the multilayered material 10 according to present embodiment includes the following steps (a), (b), and (c). The method is described below with reference to the accompanying drawings.
Step (a): coating the substrate 12 with a polysilazane-containing solution to form a coating film
Step (b): drying the coating film under a low-oxygen and low-moisture atmosphere to form the polysilazane film 14
Step (c) : irradiating the polysilazane film 14 with an energy beam in an atmosphere not substantially including oxygen or water vapor, thereby denaturing at least a part of the polysilazane film 14 to form the silicon-containing film 16 including the nitrogen-rich area 18 (Figs. 1(a) and 1(b))

### (Step (a))

In step (a), a coating film including polysilazane is formed on the substrate 12.

The method of forming the coating film is not particularly limited, but a wet method can be preferably used and a specific example thereof is a method of applying a polysilazane-containing solution.

Examples of polysilazane include perhydropolysilazane, organopolysilazane, and derivatives thereof. These may be used singly or in combination of two or more kinds. Examples of the derivatives include perhydropolysilazane and organopolysilazane in which a part or all of hydrogens are substituted with organic groups such as an alkyl group, or oxygen atom, and the like.

In present embodiment, perhydropolysilazane represented by H₃Si(NHSiH₂)ₙNHSiH₃ is preferably used, but organopolysilazane in which a part or all of hydrogen atoms are substituted with organic groups such as an alkyl group may be used. These may be used singly or in combination of two or more species.

By adding a catalyst or not to the polysilazane-containing solution or adjusting the additive amount thereof, the refractive index of the silicon-containing film in the present invention can be adjusted 1.55 to 2.1.

The polysilazane-containing solution may include metal carboxylate as a catalyst converting polysilazane to ceramics. Metal carboxylate is a compound represented by the following general formula.

(RCOO) nM

In the formula, R represents an aliphatic group or an alicyclic group with a carbon number of 1 to 22, M represents at least one species of metal selected from the following metal group, and n represents the atomic value of M.

M is selected from the group consisting of nickel, titanium, platinum, rhodium, cobalt, iron, ruthenium, osmium, palladium, iridium, and aluminum and palladium (Pd) can be particularly used. The metal carboxylate may be anhydride or hydride. The weight ratio of metal carboxylate/polysilazane is preferably 0.001 to 1.0 and more preferably 0.01 to 0.5.

Another example of the catalyst is an acetylacetonato complex. The acetylacetonato complex containing a metal is a complex in which an anion acac- generated from acetylacetone(2,4-pentadione) by acidic dissociation coordinates with a metal atom and is represented by the following general formula.

(CH₃COCHCOCH₃)ₙM

In the general formula, M represents n-valent metal.

M is selected from the group consisting of nickel, titanium, platinum, rhodium, cobalt, iron, ruthenium, osmium, palladium, iridium, and aluminum and palladium (Pd) can be particularly used. The weight ratio of acetylacetonato complex/polysilazane is preferably 0.001 to 1 and more preferably 0.01 to 0.5.

Other examples of the catalyst include amine compounds, pyridines, and acid compounds such as DBU, DBN, and/or an organic acid or an inorganic acid.

A representative example of the amine compounds is represented by the following general formula.

R⁹R⁵R⁶N

In the formula, R⁴ to R⁶ independently represent a hydrogen atom, an alkyl group, an alkenyl group, a cycloalkyl group, an aryl group, an alkylsilyl group, an alkylamino group, or an alkoxy group. Specific examples of the amine compounds include methylamine, dimethylamine, trimethylamine, ethylamine, diethylamine, triethylamine, propylamine, dipropylamine, tripropylamine, butylamine, dibutylamine, tributylamine, pentylamine, dipentylamine, tripentylaminde, hexylamine, dihexylaminde, trihexylaminde, heptylamine, diheptylamine, triheptylamine, octylamine, dioctylamine, trioctylamine, phenylamine, diphenylamine, and triphenylamine. A hydrocarbon chain included in the amine compounds may be a straight chain or a branched chain. The particularly preferable amine compounds are triethylamine, tripentylamine, tributylamine, trihexylamine, triheptylamine, and trioctylamine.

Specific examples of pyridines include pyridine, α-picoline, β-picoline, γ-picoline, piperidine, lutidine, pyrimidine, pyridazine, DBU(1,8-diazabicyclo[5.4.0]-7-undecene), and DBN(1,5-diazabicyclo[4.3.0]-5-nonene).

Specific examples of the acidic compounds include organic acids such as acetic acid, propionic acid, butyric acid, valeric acid, maleic acid, and stearic acid and inorganic acids such as hydrochloric acid, nitric acid, sulfuric acid, and hydrogen peroxide. Particularly preferable acidic compounds are propionic acid, hydrochloric acid, and hydrogen peroxide.

The amount of the amine compounds, the pyridines, the acidic compounds such as DBU, DBN, and/or organic acids or inorganic acids added to the polysilazane is equal to or more than 0.1 ppm with respect to the weight of polysilazane and preferably 10 ppm to 10%.

The polysilazane-containing solution may include metal particles. A preferable metal is Ag. The particle diameter of the metal particles is preferably less than 0.5 µm, more preferably equal to or less than 0.1 µm, and still more preferably less than 0.05 µm. Particularly, a polysilazane-containing solution in which independently-dispersed ultrafine particles with a particle diameter of 0.005 to 0.01 µm are dispersed in high-boiling-point alcohol can be preferably used. The amount of metal particles added is 0.01 to 10 wt% with respect to 100 parts by weight of polysilazane and preferably 0.05 to 5 parts by weight.

In the polysilazane-containing solution, polysilazane, and a catalyst or metal particles used if necessary are dissolved or dispersed in a solvent.

Examples of the solvent include aromatic compounds such as benzene, toluene, xylene, ethylbenzene, diethylbenzene, trimethylbenzene, and triethylbenzene; saturated hydrocarbon compounds such as n-pentane, i-pentane, n-hexane, i-hexane, n-heptane, i-heptane, n-octane, i-octane, n-nonane, i-nonane, n-decane, and i-decane; ethylcyclohexane, methylcyclohexane, cyclohexane, cyclohexene, p-menthane, decahydronaphthalene, and dipentene; ethers such as dipropylether, dibutylether, methyltertiarybutylether (MTBE), and tetrahydroxyfuran; ketones such as methylisobutylketone (MIBK); methylene chloride, and carbon tetrachloride. These may be used singly or in combination.

A method of coating the substrate with the polysilazane-containing solution can employ known coating methods and is not particularly limited. Examples thereof include a bar coating method, a roll coating method, a gravure coating method, a spray coating method, an air-knife coating method, a spin coating method, and a dip coating method.

In the method according to present embodiment, since it is not necessary to fire the polysilazane film at a high temperature as in the method described in Patent Document 3, the substrate itself is not exposed to a high temperature. Accordingly, the silicon-containing film 16 according to present embodiment can be formed directly on the surface of an optical member required precision. The silicon-containing film 16 may be formed on the surface of the substrate 12 and then may be peeled off from the substrate 12 for use.

When the resin film is used as the substrate 12, the surface of the resin film may be subjected to surface treatment such as UV ozone processing, corona processing, arc processing and plasma processing before coating the surface with the polysilazane-containing solution. For example, when a film comprised of polyolefin or cyclic olefin polymer is used as the resin film, the adhesiveness to the polysilazane film is improved by the surface treatment.

### (Step (b))

In step (b), the coating film including polysilazane formed in step (a) is dried under a low-oxygen and low-moisture atmosphere to form the polysilazane film 14.

The drying process of step (b) is preferably performed under a low-oxygen and low-moisture atmosphere in which the oxygen concentration is equal to or less than 20% (in 200, 000 ppm), preferably equal to or less than 2% (20,000 ppm), and more preferably equal to or less than 0.5% (5,000 ppm) and the relative humidity is equal to or less than 20%, preferably equal to or less than 2%, and more preferably equal to or less than 0.5%. The numerical range of the oxygen concentration and the numerical range of the relative humidity can be appropriately combined.

By performing the drying process under the low-moisture atmosphere, it is possible to further effectively suppress the conversion of the polysilanze film 14 to silicon oxide (silica) and to effectively control the gas barrier properties and the refractive index of the silicon-containing film 16.

The drying process of step (b) can be performed in an oven filled with inert gas such as nitrogen and argon gas. The drying conditions vary depending on the thickness of the polysilazane film 14 but include a temperature range of 50°C to 120°C and a time range of 1 to 10 minutes in present embodiment.

When the drying process is performed under the low-oxygen and low-moisture atmosphere, oxygen atoms which is necessary for forming the nitrogen-rich area including silicon atoms, nitrogen atoms, and oxygen atoms are introduced into the silicon-containing film by dissolved oxygen and moisture in the solvent. According to element composition ratio analysis by X-ray photoelectron spectroscopy, the ratio of the oxygen atoms to the total atoms in the silicon-containing film is equal to or less than 60 atom%, preferably 0 to 40 atom%, and more preferably 0 to 30 atom%. When the silicon-containing film 16 and the nitrogen-rich area 18 do not include oxygen atoms, it is necessary to remove the dissolved oxygen and the moisture from the solvent.

### (Step (c))

In step (c), the polysilazane film 14 is irradiated with an energy beam under an atmosphere not substantially including oxygen or water vapor and thereby at least a part of the polysilazane film 14 is denatured to form the silicon-containing film 16 including the nitrogen-rich area 18. The irradiation with an energy beam is a plasma process or an ultraviolet process, which may be combined.

In the specification, the "atmosphere not substantially including oxygen or water vapor" means an atmosphere in which oxygen and/or water vapor are not present at all or in which the oxygen concentration is equal to or less than 0.5% (5000 ppm), preferably equal to or less than 0.05% (500 ppm), more preferably equal to or less than 0.005% (50 ppm), still more preferably equal to or less than 0.002% (20 ppm), and still more preferably equal to or less than 0.0002% (2 ppm) or the relative humidity is equal to or less than 0.5%, preferably equal to or less than 0.2%, more preferably equal to or less than 0.1%, and still more preferably equal to or less than 0.05%. In addition, in the atmosphere, the water vapor concentration (the partial pressure of water vapor/atmospheric pressure at a room temperature of 23°C) is equal to or less than 140 ppm, preferably equal to or less than 56 ppm, more preferably equal to or less than 28 ppm, and still more preferably equal to or less than 14 ppm.

The irradiation with an energy beam can be performed in the pressure range of from vacuum to atmospheric pressure.

In step (c), since the polysilazane film 14 formed on the substrate 12 is irradiated with an energy beam, the characteristics of the substrate 12 are less affected. Even when an optical member is used as the substrate 12, the precision is less affected and it is thus possible to produce the silicon-containing film 16 which can be used as a high-refractive-index film suitable for an optical application. The production method including this step is simple and superior in productivity.

### (Plasma Process)

Examples of the plasma process include an atmospheric-pressure plasma process and a vacuum plasma process.

The plasma process can be performed under vacuum not substantially including oxygen or water vapor. In this specification, "vacuum." means a pressure equal to or less than 100 Pa and preferably a pressure equal to or less than 10 Pa. The vacuum in an apparatus is obtained by reducing the pressure in the apparatus from the atmospheric pressure (101325 Pa) to a pressure equal to or less than 100 Pa and preferably to a pressure equal to or less than 10 Pa by a vacuum pump and then introducing the following gas into the apparatus to be a pressure equal to or less than 100 Pa.

The oxygen concentration and the water vapor concentration under vacuum are generally evaluated as a partial pressure of oxygen and a partial pressure of water vapor.

The vacuum plasma process is performed under the above-mentioned vacuum, the partial pressure of oxygen which is equal to or less than 10 Pa (an oxygen concentration of 0.001% (10 ppm)) and preferably equal to or less than 2 Pa (an oxygen concentration of 0.0002% (2 ppm)) and the water vapor concentration which is equal to or less than 10 ppm and preferably equal to or less than 1 ppm.

Alternatively, the plasma process is performed at an ordinary pressure in the absence of oxygen and/or water vapor. Alternatively, the atmospheric-pressure plasma process is performed under the low-oxygen and low-moisture atmosphere (at an ordinary pressure) in which the oxygen concentration is equal to or less than 0.5%, the relative humidity is equal to or less than 0.5 %RH and preferably equal to or less than 0.1 % RH. The plasma process is preferably performed under the atmosphere of inert gas, rare gas, or reducing gas (at an ordinary pressure).

When the plasma process is performed under an atmosphere not satisfying the above-mentioned conditions, the nitrogen-rich area 18 in present embodiment is not formed but silicon oxide (silica) or a silanol group is generated. Accordingly, a satisfactory water-vapor barrier property may not be achieved.

When the plasma process is performed under an atmosphere not satisfying the above-mentioned conditions, silicon oxide (silica) with a low refractive index of about 1.45 is generated in mass. Accordingly, the silicon-containing film 16 with a desired refractive index may not be obtained.

From the viewpoints of forming of the nitrogen-rich area 18 in the silicon-containing film 16, examples of the gas used in the plasma process include inert gas such as nitrogen gas as, rare gas such as argon gas, helium gas, neon gas, krypton gas, and xenon gas, and reducing gas such as hydrogen gas and ammonia gas. Argon gas, helium gas, nitrogen gas, hydrogen gas, and mixture gas thereof can be preferably used.

Examples of the atmospheric-pressure plasma process include a process of passing gas between two electrodes, converting the gas into plasma, and irradiating a substrate with the plasma and a process of disposing a substrate 12 having the polysilazane film 14 attached thereto between two electrodes, passing gas therethrough, and converting the gas to plasma. Since the gas flow rate in the atmospheric-pressure plasma process lowers the oxygen concentration and the water vapor concentration in the process atmosphere, an increase in flow rate is preferable and the flow rate is preferably 0.01 to 1000 L/min and more preferably 0.1 to 500 L/min.

In the atmospheric plasma process, power (W) to be applied is preferably 0.0001 W/cm² to 100 W/cm² per unit area (cm²) of an electrode and more preferably 0.001 W/cm² to 50 W/cm². The moving speed of the substrate 12 having the polysilazane film 14 attached thereto in the atmospheric-pressure plasma process is preferably 0.001 to 1000 m/min and more preferably 0.001 to 500 m/min. The process temperature is a room temperature to 200°C.

In the vacuum plasma, a known electrode or a waveguide is disposed in a vacuum closed system and power of DC, AC, radio wave, or microwave is applied through the electrode or waveguide, thereby generating specific plasma. The power (W) applied in the plasma process is preferably 0.0001 W/cm² to 100 W/cm² per unit area (cm²) of the electrode and more preferably 0.001 W/cm² to 50 W/cm².

The degree of vacuum in the vacuum plasma process is preferably 1 Pa to 1000 Pa and more preferably 1 Pa to 500 Pa. The temperature of the vacuum plasma process is preferably a room temperature to 500°C and more preferably room temperature to 200°C from the viewpoint of the influence on the substrate. The time of the vacuum plasma process is preferably 1 second to 60 minutes and more preferably 60 seconds to 20 minutes.

### (Ultraviolet Process)

The ultraviolet process can be performed under atmospheric pressure or under vacuum. Specifically, the ultraviolet process can be performed under the atmosphere not substantially including oxygen and water vapor, under atmospheric pressure, or under vacuum. Alternatively, the ultraviolet process can be performed under a low-oxygen and low-moisture atmosphere in which the oxygen concentration is equal to or less than 0.5% (5000 ppm) and preferably equal to or less than 0.1% (1000 ppm) and the relative humidity is equal to or less than 0.5% and preferably equal to or less than 0.1%. When the plasma process is performed under the low-moisture atmosphere (at an ordinary pressure), the plasma process is preferably performed in the atmosphere of inert gas, rare gas, or reducing gas.

When the ultraviolet process is performed under an atmosphere not satisfying the above-mentioned conditions, the nitrogen-rich area 18 is not formed but silicon oxide (silica) or a silanol group is generated. Accordingly, a satisfactory water-vapor barrier property may be not achieved.

When the ultraviolet process is performed under an atmosphere not satisfying the above-mentioned conditions, silicon oxide (silica) with a low refractive index of about 1.45 is generated in mass. Accordingly, the silicon-containing film 16 with a desired refractive index may not be obtained.

The refractive index of the silicon-containing film 16 in present embodiment can be arbitrarily controlled 1.55 to 2.1 by changing the amount of exposure, the oxygen and water vapor concentrations, and the process time in the ultraviolet irradiation.

Examples of the method of generating ultraviolet rays include methods using a metal halide lamp, a high-pressure mercury lamp, a low-pressure mercury lamp, a xenon arc lamp, a carbon arc lamp, an excimer lamp, and a UV laser.

By performing the above-mentioned steps, it is possible to produce the multilayered material 10 according to present embodiment. In present embodiment, the following processes may be performed on the silicon-containing film 16.

By performing an irradiation with an active energy beam or a heating process on the silicon-containing film 16 denatured through the plasma process or the ultraviolet process, the nitrogen-rich area 18 in the silicon-containing film 16 can be made to increase.

Examples of the active energy beam include a microwave, an infrared ray, an ultraviolet ray, and an electron beam. Among these, an infrared ray, an ultraviolet ray, and an electron beam can be preferably used.

As described above, examples of the method of generating ultraviolet rays include methods using a metal halide lamp, a high-pressure mercury lamp, a low-pressure mercury lamp, a xenon arc lamp a carbon arc lamp, an excimer lamp, and a UV laser.

Examples of the method of generating infrared rays include methods using an infrared radiator and an infrared ceramic heater. When the infrared radiator is used, a near-infrared radiator having an intensity peak at a wavelength of 1. 3 µm, a middle-infrared radiator having an intensity peak at a wavelength of 2.5 µm, a far-infrared radiator having an intensity peak at a wavelength of 4.5 µm according to used wavelength of infrared rays.

An infrared laser having a single spectrum is preferably used for the irradiation with an active energy beam. Specific examples of the infrared laser include gas chemical lasers such as HF, DF, HCl, DCl, HBr, and DBr, a CO₂ gas laser, a N₂O gas laser, a far-infrared laser (such as NH₃ and CF₄) excited with a CO₂ gas laser, and compound semiconductor lasers (with an irradiation wavelength of 2.5 to 20 µm) such as Pb(Cd)S, PbS(Se), Pb(Sn)Te, and Pb(Sn)Se.

Embodiments of the present invention have been described hitherto with reference to the accompanying drawings, but the embodiments are only an example of the present invention and the present invention may employ various other configurations.

For example, the nitrogen-rich area 18 may be disposed in a part in the vicinity of the top surface 16a of the silicon-containing film 16 or the entire film of the silicon-containing film 16 may be constructed by the nitrogen-rich area 18.

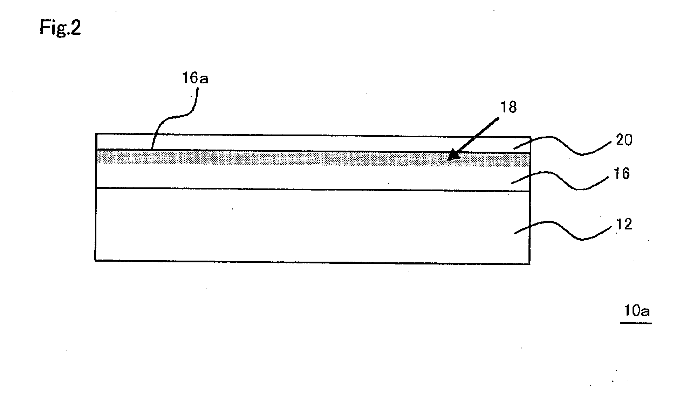

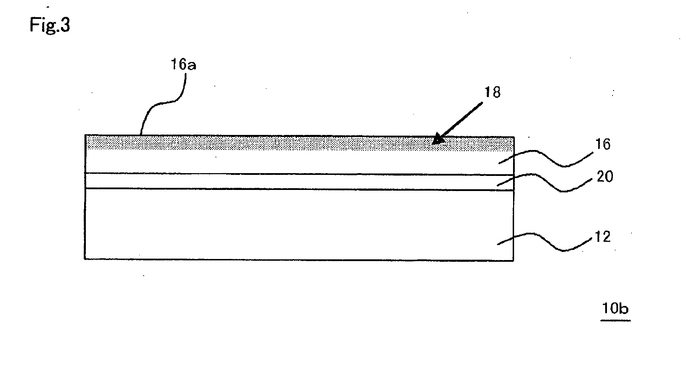

As the multilayered material 10a shown in Fig. 2, a vapor-deposited film 20 may be disposed on the top surface 16a of the silicon-containing film 16. In another aspect, as a multilayered material 10b shown in Fig. 3, the vapor-deposited film 20 may be disposed between the substrate 12 and the silicon-containing film 16.

The vapor-deposited film 20 is obtained by at least one method selected from a physical vapor deposition (PVD) method and a chemical vapor deposition (CVD) method.

Since the surface of the silicon-containing film 16 having the nitrogen-rich area 18 according to present embodiment is superior in thermal stability and smoothness, it is possible to form a dense vapor-deposited film 20 which is less affected by unevenness or thermal expansion of the surface of the substrate which was a problem in producing the vapor-deposited film 20.

When the vapor-deposited film 20 is formed between the resin film (the substrate 12) and the silicon-containing film 16 having the nitrogen-rich area 18, the silicon-containing film 16 can cover defective portions such as pinholes of the vapor-deposited film 20 and thus it is possible to achieve a gas barrier property higher than that of the single silicon-containing film 16 or the single vapor-deposited film 20, according to present embodiment.

The vapor-deposited film 20 used in present embodiment is comprised of an inorganic compound. Specifically, the vapor-deposited film include as a major component oxide, nitride, or oxynitride of at least one kind of metal selected from the group consisting of Si, Ta, Nb, Al, In, W, Sn, Zn, Ti, Cu, Ce, Ca, Na, B, Pb, Mg, P, Ba, Ge, Li, K, and Zr.

The method of forming the vapor-deposited film employs a physical vapor deposition (PVD) method, a lower-temperature plasma vapor deposition (CVD) method, an ion plating method, and a sputtering method. The preferable thickness of the vapor-deposited film 20 is 1 to 1000 nm and particularly 10 to 100 nm.

The silicon-containing film 16 formed through the above-mentioned method according to present embodiment includes the nitrogen-rich area 18. The nitrogen-rich area 18 has a high refractive index and the refractive index is equal to or more than 1.55, preferably 1.55 to 2.1, and more preferably 1.58 to 2.1. Since the silicon-containing film according to present embodiment is constructed by the nitrogen-rich area 18 as a whole, the refractive index of the silicon-containing film 16 itself is in the above-mentioned range.

The silicon-containing film 16 according to present embodiment has a high refractive index and exhibits satisfactory abrasion resistance even in a relatively thin coating film. It is superior in transparency and adhesiveness to the substrate.

Therefore, the silicon-containing film 16 according to present embodiment can be suitably used as a hard coating material and an anti-reflection coating material formed on the surfaces of displays such as a word processor, a computer, a television; polarizing plates for liquid crystal display devices; optical lenses such as a lens of sunglasses comprised of transparent plastics, a lens of prescribed glasses, a contact lens, a photochromic lens and a lens of a camera view finder; covers of various meters; and glass windows of automobiles and trains.

While embodiments of the present invention have been described hitherto with reference to the accompanying drawings, these embodiments are only an example of the present invention and the present invention may employ various configurations than described above.

### EXAMPLES

The invention will be described specifically below with reference to examples, but the present invention is not limited to the examples.

In Examples 1 to 20 and Comparative Examples 1 to 16, the multilayered material according to the present invention is used as a gas-barrier multilayered material.

In Examples 1, 2, 11, 14, 17, and 18 and Comparative Examples 9, 11, and 13, a silicon substrate instead of a resin substrate is used as a substrate for measuring an IR spectrum so as to precisely measure the IR spectrum of a nitrogen-rich area with a thickness of 0.005 to 0.2 µm in the multilayered material.

### <Example 1>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried at 120°C for 10 minutes under the nitrogen atmosphere, whereby a polysilazane film with a thickness of 0.025 µm was produced. The drying was performed under an atmosphere in which the water vapor concentration is about 500 ppm.

A vacuum plasma process was performed on the polysilazane film under the following conditions.
- Vacuum plasma processing apparatus: made by U-TEC Corporation
- Gas: Ar
- Gas flow rate: 50 mL/min
- Pressure: 19 Pa
- Temperature: room temperature
- Power applied per unit area of electrode: 1.3 W/cm²
- Frequency: 13.56 MHz
- Process time: 5 min

### <Example 2>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a catalyst was not added, and then the resultant was dried under the same conditions as Example 1, whereby a polysilazane film with a thickness of 0.025 µm was produced.

Subsequently, a vacuum plasma process was performed under the same conditions as Example 1.

### <Example 3>

A polyethylene terephthalate (PET) film (with a thickness of 50 µm, "A4100" made by Toyobo Co., Ltd.) was bar-coated with a 2 wt% xylene (dehydrated) solution of polysilazane (NL110A made by AZ Electronic Materials S.A.), and then the resultant was dried under the same conditions as Example 1, whereby a polysilazane film with a thickness of 0.1 µm was produced.

Subsequently, a vacuum plasma process was performed under the same conditions as Example 1.

### <Example 4>

A PET film (with a thickness of 50 µm, "A4100" made by Toyobo Co., Ltd.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0. 5 µm was produced.

Subsequently, a vacuum plasma process was performed under the same conditions as Example 1.

### <Example 5>

A PET film (with a thickness of 50 µm, "A4100" made by Toyobo Co., Ltd.) was bar-coated with a 20 wt% xylene (dehydrated) solution of polysilazane (NL110A made by AZ Electronic Materials S.A.), and then the resultant was dried under the same conditions as Example 1, whereby a polysilazane film with a thickness of 1.0 µm was produced.

Subsequently, a vacuum plasma process was performed under the same conditions as Example 1.

### <Example 6>

A polyimide film (with a thickness of 20 µm, "KAPTON 80EN" made by DU PONT-TORAY CO., LTD.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0.5 µm was produced.

Subsequently, a vacuum plasma process was performed under the same conditions as Example 1.

### <Example 7>

A non-processed surface of a polyethylene naphthalate (PEN) film (with a thickness of 100 µm, "Q65FA" made by Teij in DuPont Films Japan Limited) was bar-coated with a 20 wt% xylene (dehydrated) solution of polysilazane (NL110A made by AZ Electronic Materials S.A.), and then the resultant was dried under the same conditions as Example 1, whereby a polysilazane film with a thickness of 1.0 µm was produced.

Subsequently, a vacuum plasma process was performed under the same conditions as Example 1.

### <Example 8>

A corona-processed surface of a biaxially-stretched polypropylene (OPP) film (with a thickness of 30 µm, made by Tohcello Co., Ltd.) was bar-coated with a 20 wt% dibutylether solution of polysilazane (NL120A made by AZ Electronic Materials S.A.), and then the resultant was dried at 110°C for 20 minutes under the nitrogen atmosphere, whereby a polysilazane film with a thickness of 1.0 µm was produced. The drying was performed under an atmosphere in which the oxygen concentration is about 500 ppm and the water vapor concentration is about 500 ppm.

Subsequently, a vacuum plasma process was performed under the same conditions as Example 1.

### <Example 9>

A UV-ozone-processed surface of a cyclic polyolefin (APEL (registered trademark)) film (with a thickness of 100 µm, made by Mitsui Chemicals Inc.) was bar-coated with a 20 wt% dibutylether solution of polysilazane (NL120A made by AZ Electronic Materials S.A.), and then the resultant was dried under the same conditions as Example 8, whereby a polysilazane film with a thickness of 1.0 µm was produced.

Subsequently, a vacuum plasma process was performed under the same conditions as Example 1.

### <Example 10>

An alumina-deposited PET film (with a thickness of 12 µm, "TL-PET" made by Tohcello Co., Ltd.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0.5 µm was produced.

Subsequently, a vacuum plasma process was performed under the same conditions as Example 1.

### <Example 11>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried under the same conditions as Example 1, whereby a polysilazane film with a thickness of 0.025 µm was produced.

Subsequently, a vacuum plasma process was performed under the same conditions as Example 1.

The resultant film was irradiated with ultraviolet rays (172 nm) under an atmosphere of nitrogen for 20 minutes by the use of an excimer lamp ("UEP20B" and "UER-172B", made by Ushio Inc.).

### <Example 12>

A PET film (with a thickness of 50 µm, "A4100" made by Toyobo Co., Ltd.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0. 5 µm was produced.

Subsequently, a vacuum plasma process and an ultraviolet irradiation process were performed under the same conditions as Example 11.

### <Example 13>

A UV-ozone-processed surface of a cyclic polyolefin (APEL (registered trademark)) film (with a thickness of 100 µm, made by Mitsui Chemicals Inc.) was bar-coated with a 20 wt% dibutylether solution of polysilazane (NL120A made by AZ Electronic Materials S.A.), and then the resultant was dried under the same conditions as Example 8, whereby a polysilazane film with a thickness of 1.0 µm was produced.

Subsequently, a vacuum plasma process and an ultraviolet irradiation process were performed under the same conditions as Example 11.

### <Example 14>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried under the same conditions as Example 1, whereby a polysilazane film with a thickness of 0.025 µm was produced.

A vacuum plasma process was performed on the polysilazane film under the following conditions.
- Vacuum plasma processing apparatus: made by U-TEC Corporation
- Gas: N₂
- Gas flow rate: 50 mL/min
- Pressure: 19 Pa
- Temperature: room temperature
- Power applied per unit area of electrode: 1.3 W/cm²
- Frequency: 13.56 MHz
- Process time: 5 min

### <Example 15>

A PET film (with a thickness of 50 µm, "A4100" made by Toyobo Co. , Ltd.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0. 5 µm was produced.

Subsequently, a vacuum plasma process was performed under the same conditions as Example 14.

### <Example 16>

A polyimide film (with a thickness of 20 µm, "KAPTON 80EN" made by DU PONT-TORAY CO., LTD.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0.5 µm was produced.

Subsequently, a vacuum plasma process was performed under the same conditions as Example 14.

### <Example 17>

A polyimide film (with a thickness of 20 µm, "KAPTON 80EN" made by DU PONT-TORAY CO., LTD.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0.5 µm was produced.

Subsequently, an atmospheric-pressure plasma process was performed on the polysilazane film under the following conditions.
- Atmospheric-pressure plasma processing apparatus: APT-02 made by Sekisui Chemical Co., Ltd.
- Gas: Ar
- Gas flow rate: 20 mL/min
- Pressure: atmospheric pressure
- Temperature: room temperature (23°C)
- Power applied: about 120W
- Power applied per unit area of electrode: 1.3 W/cm²
- Voltage and pulse frequency of DC power source: 80 V and 30 kHz
- Scanning speed: 20 mm/min
- Oxygen concentration: 20 ppm (0.002%)
- Water vapor concentration: Relative humidity: 0.1 %RH

### <Example 18>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried under the same conditions as Example 1, whereby a polysilazane film with a thickness of 0.025 µm was produced.

The resultant film was irradiated with ultraviolet rays (172 nm) under an atmosphere of nitrogen for 15 minutes by the use of an excimer lamp ("UEP20B" and "UER-172B", made by Ushio Inc.).

### <Example 19>.

A polyimide film (with a thickness of 20 µm, "KAPTON 80EN" made by DU PONT-TORAY CO., LTD.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0.5 µm was produced.

Similarly to Example 18, the resultant film was irradiated with ultraviolet rays (172 nm) under an atmosphere of N₂ (at an ordinary pressure) in which the oxygen concentration is adjusted to 0.005% and the relative humidity is adjusted to 0.1 %RH for 15 minutes by the use of an excimer lamp ("UEP20B" and "UER-172B", made by Ushio Inc.).

### <Example 20>

A polyimide film (with a thickness of 20 µm, "KAPTON 80EN" made by DU PONT-TORAY CO., LTD.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0.5 µm was produced.

The resultant film was irradiated with ultraviolet rays (172 nm) under an atmosphere of N₂ (at an ordinary pressure) in which the oxygen concentration is adjusted to 0.5% and the relative humidity is adjusted to 0.5 %RH for 15 minutes by the use of an excimer lamp ("UEP20B" and "UER-172B", made by Ushio Inc.).

### <Comparative Example 1>

In Comparative Example 1, the PET film (with a thickness of 50 µm, "A4100" made by Toyobo Co., Ltd.) itself used in the examples was tested.

### <Comparative Example 2>

In Comparative Example 2, the polyimide film (with a thickness of 20 µm, "KAPTON 80EN" made by DU PONT-TORAY CO., LTD.) itself used in the examples was tested.

### <Comparative Example 3>

In Comparative Example 3, the PEN film (with a thickness of 100 µm, "Q65FA" made by Teijin DuPont Films Japan Limited) itself used in the examples was tested.

### <Comparative Example 4>

In Comparative Example 4, the biaxially-stretched polypropylene (OPP) film (with a thickness of 50 µm, made by Tohcello Co., Ltd.) itself used in the examples was tested.

### <Comparative Example 5>

In Comparative Example 5, the cyclic polyolefin (APEL (registered trademark)) film (with a thickness of 100 µm, made by Mitsui Chemicals Inc.) itself used in the examples was tested.

### <Comparative Example 6>

In Comparative Example 6, the alumina-deposited PET film (with a thickness of 12 µm, "TL-PET" made by Tohcello Co., Ltd.) itself used in the examples was tested.

### <Comparative Example 7>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried under the same conditions as Example 1, whereby a polysilazane film with a thickness of 0.025 µm was produced.

### <Comparative Example 9>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried under the same conditions as Example 1, whereby a polysilazane film with a thickness of 0.025 µm was produced.

Subsequently, a heating process was performed on the polysilazane film under an atmosphere of air at 250°C for 1.5 hours.

### <Comparative Example 10>

In the same way as Example 6, a polysilazane film with a thickness of 0.5 µm was formed on the polyimide film (with a thickness of 20 µm, "KAPTON 80EN" made by DU PONT-TORAY CO., LTD.).

Subsequently, a heating process was performed on the polysilazane film under an atmosphere of air at 250°C for 1.5 hours.

### <Comparative Example 11>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried under the same conditions as Example 1, whereby a polysilazane film with a thickness of 0.025 µm was produced.

A vacuum plasma process was performed on the polysilazane film under the following conditions.
- Vacuum plasma processing apparatus: made by U-TEC Corporation
- Gas: O₂
- Gas flow rate: 50 mL/min
- Pressure: 50 Pa
- Temperature: room temperature
- Power applied per unit area of electrode: 1.3 W/cm²
- Frequency: 13.56 MHz
- Process time: 5 min

### <Comparative Example 12>

In the same way as Example 6, a polysilazane film with a thickness of 0.5 µm was formed on the polyimide film (with a thickness of 20 µm, "KAPTON 80EN" made by DU PONT-TORAY CO., LTD.). An atmospheric-pressure plasma process was performed on the polysilazane film under the following conditions.

- Atmospheric-pressure plasma processing apparatus: APT-02 made by Sekisui Chemical Co., Ltd.
- Gas: mixture gas of Ar and O₂
- Gas flow rate: 20 L/min for Ar and 100 mL/min for O₂
- Pressure: atmospheric pressure
- Temperature: room temperature (23°C)
- Power applied: about 120W
- Power applied per unit area of electrode: 1.3 W/cm²
- Voltage and pulse frequency of DC power source: 80 V and 30 kHz
- Scanning speed: 20 mm/min

### <Comparative Example 13>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.), and then the resultant was dried under the same conditions as Example 1, whereby a polysilazane film with a thickness of 0.025 µm was produced. The resultant film was irradiated with ultraviolet rays (172 nm) under an atmosphere of air for 15 minutes by the use of an excimer lamp ("UEP20B" and "UER-172B", made by Ushio Inc.).

### <Comparative Example 14>

In the same way as Example 6, a polysilazane film with a thickness of 0.5 µm was formed on the polyimide film (with a thickness of 20 µm, "KAPTON 80EN" made by DU PONT-TORAY CO., LTD.). In the same way as in Comparative Example 13, the resultant film was irradiated with ultraviolet rays (172 nm) under an atmosphere of air for 15 minutes by the use of an excimer lamp ("UEP20B" and "UER-172B", made by Ushio Inc.).

### <Comparative Example 15>

A polyimide film (with a thickness of 20 µm, "KAPTON 80EN" made by DU PONT-TORAY CO., LTD.) was bar-coated with a 5 wt% xylene (dehydrated) solution of polysilazane (NL110A made by AZ Electronic Materials S.A.), and then the resultant was dried under the same conditions as Example 1, whereby a polysilazane film with a thickness of 0.5 µm was produced.

The resultant film was irradiated with ultraviolet rays (172 nm) under a gaseous atmosphere that N₂ is added to air (with an oxygen concentration of 1% and a relative humidity of 5 %RH) for 15 minutes by the use of an excimer lamp ("UEP20B" and "UER-172B", made by Ushio Inc.).

### <Comparative Example 16>

A polyethylene terephthalate (PET) film (with a thickness of 50 µm, "A4100" made by Toyobo Co., Ltd.) was bar-coated with a 2 wt% xylene (dehydrated) solution of polysilazane (NL110A made by AZ Electronic Materials S.A.), and then the resultant was dried under the same conditions as Example 1, whereby a polysilazane film with a thickness of 0.1 µm was produced.

A vacuum plasma process was performed on the polysilazane film under the following conditions.
- Vacuum plasma processing apparatus: made by U-TEC Corporation
- Gas: O₂
- Gas flow rate: 50 mL/min
- Pressure: 50 Pa
- Temperature: room temperature
- Power applied per unit area of electrode: 1.3 W/cm²
- Frequency: 13.56 MHz
- Process time: 5 min

### <Film Structure Analysis and Element Composition Ratio Measurement 1>

Composition ratios of constituent elements in the depth direction of a film were measured by the use of an X-ray photoelectron spectroscopic (XPS) instrument ("ESCALAB220iXL", made by VG company, X-ray source: Al-Kα, 0.05 nm/sputter second in terms of Argon sputter SiO₂).

### <Film Structure Analysis and Element Composition Ratio Measurement 2>

An FT-IR spectrum was measured by the use of an infrared and visible spectroscopic (FT-IR) instrument ("FT/IR-300E", made by JASCO Corporation) and the structure of the film was analyzed.

In the FT-IR spectrum, the ratio of the nitrogen atoms and the oxygen atoms (N/(O+N)) was calculated using (N/(O+N))=1-(O/(O+N)) from the peak top based on O-Si-O or O-Si-N with reference to the graph (see Fig. 6) illustrating the relationship between the wave number of the peak top based on O-Si-O or O-Si-N and the ratio O/ (O+N) in Non-patent Document 2.

### <Measurement of Water vapor transmission rate >

The water vapor transmission rate was measured by the use of a water vapor transmission rate measuring instrument ("PERMATRAN 3/31", made by MOCON Inc.) using an isopiestic method-infrared sensor method under an atmosphere of 40°C and 90 %RH. The lower detection limit of this instrument was 0.01 g/m²·day.

### <Evaluation of Abrasion resistance (Steel Wool Test)>

In Examples 4 and 6 and Comparative Examples 1 and 2, the film surface was rubbed by reciprocating ten times with a load of 600 g using steel wool No. 000. Subsequently, abrasions on the film surface were observed with naked eyes.

### <Measurement of Oxygen Permeability>

The oxygen permeability was measured by the use of an oxygen permeability measuring instrument ("OX-TRAN2/21", made by MOCON Inc.) using an isopiestic method-electrolytic electrode method under an atmosphere of 23°C and 90 %RH. The lower detection limit of this instrument was 0.01 cc/m²·day, atm.

### <Measurement of Oxygen Concentration>

The oxygen concentration of outlet gas of the used apparatus was measured by the use of an oxygen sensor (JKO-O2LJDII, made by Jikco Ltd.). The result is shown as oxygen concentration (%) in Table 2.

### <Measurement of Water Vapor Concentration>

The water vapor concentration (relative humidity) of outlet gas of the used apparatus was measured by the use of a thermo-hygrometer (TESTO 625, made by TESTO Co., Ltd.). The result is shown as water vapor concentration (%RH) in Table 2.

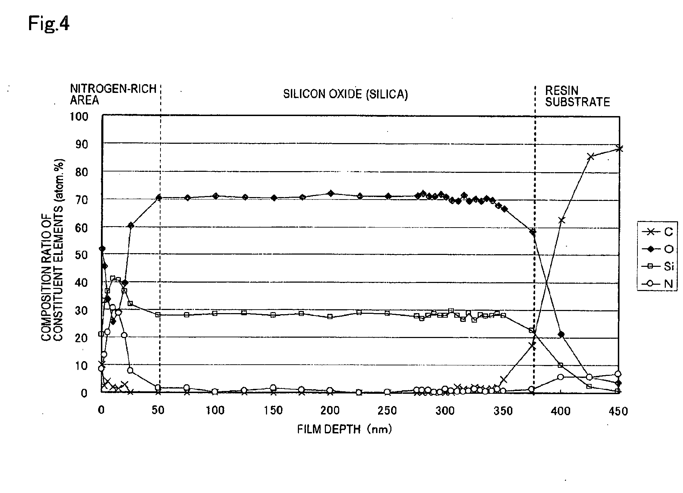

In the film of Example 6, the composition ratios of constituent elements in the depth direction of the film were measured by the sue of the X-ray photoelectron spectroscopic (XPS) method. The result is shown in Fig. 4. In the chart shown in Fig. 4, the vertical axis represents the composition ratio of constituent element (atom%) and the horizontal axis represents the film depth (nm). It can be seen that a nitrogen-rich area including Si, O, and N is formed in the area about 50 nm (0.05 µm) deep from the film surface. It can be also seen that a silicon oxide (silica) layer is formed from the result that an O/Si ratio is about 2 inside the film.

That is, the area in the depth range of 0 to 50 nm is a nitrogen-rich area, the area in the depth range of 50 to 375 nm is an area of silicon oxide (silica), and the area in the depth range of 375 to 450 nm is a substrate.

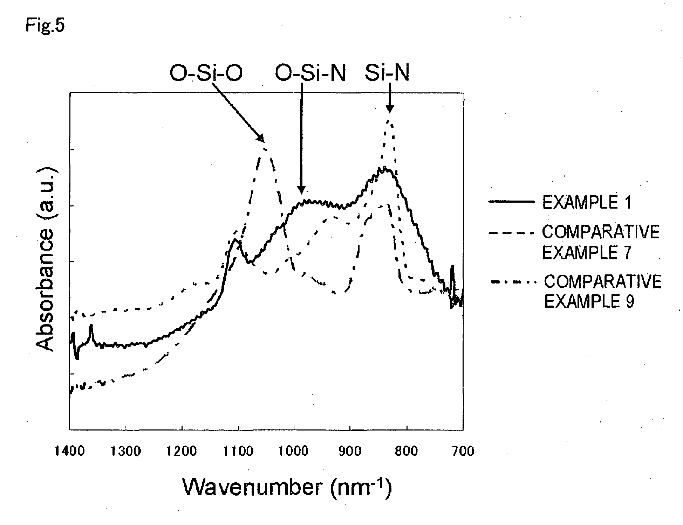

The FT-IR spectrum was measured in the thin film with a thickness of 0.025 µm in Example 1 as shown in Fig. 5. As a result, peaks of Si-N (850 cm⁻¹) and O-Si-N (980 cm⁻¹) based on the nitrogen-rich area including Si, O, and N could be seen as in the result of XPS.

On the other hand, in the film subjected to no surface treatment as in Comparative Example 7, only the peak of Si-N (830 cm⁻¹) based on polysilazane as a source material was observed.

In the film subjected to the heating process as in Comparative Example 9, the peak of O-Si-O (1050 cm⁻¹) based on silica increased. Accordingly, it could be seen that a silica layer was mainly formed by the heating process, unlike Example 1.

The ratio of oxygen atoms and nitrogen atoms (the N/ (O+N) ratio) which was calculated by the FT-IR spectrum of the thin film and the element composition ratios at a film depth of about 15 nm by XPS was shown in Table 1. From the result of Example 1 in Table 1, it could be seen that the N/(O+N) ratio obtained from the FT-IR spectrum was 0.5, which shows that the ratio of the nitrogen atoms and the ratio of the oxygen atoms in the structure were equal to each other. This value almost agreed to the N/(O+N) ratio (=0.54) measured by the XPS.

From the result of Example 14 in Table 1, it could be seen that the N/(O+N) ratio was 0.5 when nitrogen gas was used in the vacuum plasma process, and the nitrogen-rich area including Si, O, and N was formed as Example 1 where Ar gas was used in the plasma process.

From the result of Example 18 in Table 1, the N/(O+N) ratio was 0.5 when the ultraviolet irradiation was performed under the atmosphere of nitrogen. The N/(O+N) ratio measured by XPS was 0.57 and almost agreed thereto.

It could be seen from these results that the nitrogen-rich area including Si, O, and N was formed, similarly to the plasma process in Example 1.

On the other hand, when the heating process was performed as in Comparative Example 9, or when oxygen was used as the plasma gas species as in Comparative Example 11, or when the film was irradiated with ultraviolet rays under the atmosphere of air as in Comparative Example 13, the N/(O+N) ratio of Comparative Examples 11 and 13 was almost 0 and the N/(O+N) ratio of Comparative Example 9 is 0.02 in the case of measuring by XPS, which means that it includes almost only oxygen atoms. It could be seen from this result that silicon oxide (silica) was mainly formed through the oxidation when oxygen was used as the plasma gas species or when the process was performed under the high-oxygen and high-moisture atmosphere.

Comparing Example 1 with Examples 2 and 11, the N/(O+N) ratio in Examples 2 and 11 was equal to or higher than 0.5, which shows that oxygen atoms are more than nitrogen atoms. It could be seen from this result that the nitrogen concentration further increased when polysilazane not having a catalyst was used as Example 2 or when the ultraviolet irradiation was additionally performed as Example 11.

The measurement results of the oxygen permeability and the water vapor transmission rate are shown in Table 2. Compared with the film subjected to the heating process in Example 10, the oxygen permeability and the water vapor transmission rate were very lowered without depending on the substrate by performing the vacuum or atmospheric-pressure plasma process on the polysilazane film as Examples 3 to 10, 12, 13, and 15 to 17, which exhibited superior oxygen and water vapor barrier properties.

It could be seen from Examples 3 to 5 that superiod oxygen and water vapor barrier properties were exhibited even with a very small thickness of 0.1 µm without depending on the thickness of the coating film.

It could also be seen that superior oxygen and water vapor barrier properties were exhibited even with a very small thickness of the PET film when the PET film having alumina attached thereto was used as Example 10. Accordingly, it is predicted that superior oxygen and water vapor barrier properties are exhibited even when a vapor-deposited film is formed on a silicon-containing film.

It could be seen that superior oxygen and water vapor barrier properties were exhibited by additionally performing the ultraviolet irradiation after performing the plasma process as Examples 12 and 13.

It could be seen that superior oxygen and water vapor barrier properties were exhibited even when the ultraviolet irradiation was performed under the atmosphere of nitrogen as Example 19.

On the other hand, in the silica film formed by performing the heating process on the polysilazane film as in Comparative Example 10, the oxygen permeability and the water vapor transmission rate were higher than those in the examples and the oxygen and water vapor barrier properties were inferior.

When the plasma process was performed under the ordinary pressure using mixture gas of Ar and O₂ as a plasma gas species as in Comparative Example 12, it could be seen that the oxygen permeability was the same as in the examples, but the water vapor transmission rate increased and the water vapor barrier property was inferior.

When the plasma process was performed under vacuum using oxygen as a gas species as in Comparative Example 16, it could be seen that the oxygen permeability of the obtained silicon-containing film was the same as in the silicon-containing films of the examples, but the water vapor transmission rate was higher than that when Ar or N₂ was used and the water vapor barrier property was inferior.

When the ultraviolet irradiation was performed under the atmosphere of air as in Comparative Example 14 or when the ultraviolet irradiation was performed under the atmosphere with an oxygen and water vapor concentration equal to or more than 1% as in Comparative Example 15, the oxygen and water vapor barrier properties were inferior, unlike the case where the process was performed under the atmosphere of nitrogen (with an oxygen concentration of 0.005% and a water vapor concentration of 0.1 %RH) in Example 19. This is because the nitrogen-rich area was not formed by performing the process with a high oxygen concentration and a high water vapor concentration.

The abrasion resistance was evaluated. Many abrasions were generated on the surfaces of the substrates of Comparative Examples 1 and 2 through the steel wool test. On the contrary, no abrasion was generated in Examples 4 and 6.

**Table 1**

| | Analysis result of IR spectrum | | Analysis result of XPS *2 | | |
|---|---|---|---|---|---|
| | IR spectrum*¹ | N/(N+O) ratio | N/(N+O) ratio | N/(Si+N+O) ratio | N atom composition ratio |
| | cm⁻¹ | - | - | - | atom% |
| Example 1 | 980 | 0.5 | 0.54 | 0.31 | 30.5 |
| Example 2 | 950 | 0.6 | 0.73 | 0.37 | 37.2 |
| Example 11 | 960 | 0.55 | 0.44 | 0.24 | 24.2 |
| Example 14 | 980 | 0.5 | 0.54 | 0.30 | 30.0 |
| Example 17 | 1025 | 0.2 | 0.20 | 0.13 | 13.3 |
| Example 18 | 980 | 0.5 | 0.57 | 0.31 | 30.6 |
| Comparative Example 9 | 1050 | 0 | 0.02 | 0.01 | 1.2 |
| Comparative Example 11 | 1050 | 0 | 0.02 | 0.01 | 1.4 |
| Comparative Example 13 | 1050 | 0 | 0.02 | 0.01 | 1.2 |

| | | | | | |
|---|---|---|---|---|---|
| ^{*1} Wave number of peak top based on O-Si-O or O-Si-N ^{*2} Calculated from the element composition ratio at a film depth of 15 nm | | | | | |

**Table 2**

| | Substrate | Thickness of substrate | Thickness of coating film | External atmosphere in process | Oxygen concentration | Relative humidity | Plasma process | | UV iradiation (172nm) | Heating process | Oxygen permeabilty | Water vapor transmssion rate |
|---|---|---|---|---|---|---|---|---|---|---|---|---|
| | | | | | | | Ges species | Process time | | | 23°C, 90%RH | 40°C, 90%RH |
| | | µm | µm | - | % | %RH | - | min | min | - | cc/m²·day, atm | g/m²·day, atm |
| Ex3 | PET | 50 | 0.1 | Vacuum | - | - | Ar | 5 | - | - | 0.05 | <0.01 |
| Ex4 | PET | 50 | 0.5 | Vacuum | - | - | Ar | 5 | - | - | 0.05 | <0.01 |
| Ex5 | PET | 50 | 1.0 | Vacuum | - | - | Ar | 5 | - | - | 0.05 | <0.01 |
| Ex6 | polyimide | 20 | 0.5 | Vacuum | - | - | Ar | 5 | - | - | 0.05 | <0.01 |
| Ex7 | PEN | 100 | 1.0 | Vacuum | - | - | Ar | 5 | - | - | <0.01 | <0.01 |
| Ex8 | OPP | 30 | 1.0 | Vacuum | - | - | Ar | 5 | - | - | 2.00 | <0.01 |
| Ex9 | APEL | 100 | 1.0 | Vacuum | - | - | Ar | 5 | - | - | 0.15 | <0.01 |
| Ex10 | Al₂O₃-PET | 12 | 0.5 | Vacuum | - | - | Ar | 5 | - | - | 0.25 | <0.01 |
| Ex 12 | PET | 50 | 0.5 | Vacuum | - | - | Ar | 5 | 20 | - | 0.01 | <0.01 |
| Ex 13 | APEL | 100 | 1.0 | Vacuum | - | - | Ar | 5 | 20 | - | 0.05 | <0.01 |
| Ex 15 | PET | 50 | 0.5 | Vacuum | - | - | N₂ | 5 | - | - | 0.05 | <0.01 |
| Ex 16 | polyimide | 20 | 0.5 | Vacuum | - | - | N₂ | 5 | - | - | 0.05 | <0.01 |
| Ex 17 | polyimide | 20 | 0.5 | Atmospheric air | 0.002 | 0.1 | Ar | 20 mm/min | - | - | 0.05 | <0.01 |
| Ex19 | polyimide | 20 | 0.5 | Atmosphere of N₂ (ordinary pressure) | 0.005 | 0.1 | - | - | 15 | - | 0.06 | <0.01 |
| Ex 20 | polyimide | 20 | 0.5 | Atmosphere of N₂ (ordinary pressure) | 0.5 | 0.5 | - | - | 15 | - | 0.05 | <0.01 |
| Com Ex 1 | PET | 50 | - | - | - | - | - | - | - | - | 25 | 12 |
| Com Ex 2 | polyimide | 20 | - | - | - | - | - | - | - | - | 30 | 30 |
| Com Ex 3 | PEN | 100 | - | - | - | - | - | - | - | - | 2.6 | 2.8 |
| 4 Com Ex | OPP | 30 | - | - | - | - | - | - | - | - | 1500 | 3.3 |
| Com Ex 5 | APEL | 100 | - | - | - | - | - | - | - | - | 200 | 0.7 |
| Com Ex 6 | Al₂O₃-PET | 12 | - | - | - | - | - | - | - | - | 3.7 | 2.3 |
| Com Ex 10 | polyimide | 20 | 0.5 | Atmospheric air | 20 | 1 | - | - | - | 250°C+1. 5h | 0.39 | 0.7 |
| Com Ex 12 | polyimide | 20 | 0.5 | Atmospheric air | 1 | 1 | Ar+O₂ | 20 mm/min | - | - | 0.11 | 14.8 |
| Com Ex 14 | polyimide | 20 | 0.5 | Atmospheric air | 20 | 40 | - | - | 15 | - | 0.14 | 30.0 |
| Com Ex 15 | polyimide | 20 | 0.5 | N₂+atmospheric air (ordinary pressure) | 1 | 5 | - | - | 15 | - | 0.10 | 18.0 |
| Com Ex 16 | PET | 20 | 0.1 | Vacuum | 100 | - | O₂ | 5 | - | - | 0.10 | 0.5 |

In Examples 21 to 33 and Comparative Examples 17 to 25, the multilayered material according to the present invention was used as a high-refractive-index film for an optical member. In Examples 21 to 32 and Comparative Examples 17 to 23, a silicon substrate instead of a resin substrate was used as a substrate to measure a refractive index.

In the following examples and comparative examples, the relative humidity was measured by a thermo-hygrometer (TESTO 625, made by TESTO Co., Ltd.). The oxygen concentration was measured by an oxygen sensor (JKO-O2LJDII, made by Jikco Ltd.).

### <Example 21>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a palladium catalyst (hereinafter, abbreviated as Pd catalyst), and then the resultant was dried at 120°C for 10 minutes under the nitrogen atmosphere, whereby a polysilazane film with a thickness of 0.025 µm was produced. The drying was performed under an atmosphere in which the relative humidity is about 0.5%.

A vacuum plasma process was performed on the polysilazane film under the following conditions.
- Vacuum plasma processing apparatus: made by U-TEC Corporation
- Gas: Ar
- Pressure: 19 Pa
- Temperature: room temperature
- Power applied per unit area of electrode: 1.3 W/cm²
- Frequency: 13.56 MHz
- Process time: 5 min

### <Example 22>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.08 µm was

### produced.

Subsequently, a vacuum plasma process was performed under the same conditions as Example 21.

### <Example 23>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a catalyst was not added, and then the resultant was dried under the same conditions as Example 21, whereby a polysilazane film with a thickness of 0.025 µm was produced.

Subsequently, a vacuum plasma process was performed under the same conditions as Example 21.

### <Example 24>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.025 µm was produced.

A vacuum plasma process was performed on the polysilazane film under the following conditions.
- Vacuum plasma processing apparatus: made by U-TEC Corporation
- Gas: N₂
- Pressure: 19 Pa
- Temperature: room temperature
- Power applied per unit area of electrode: 1.3 W/cm²
- Frequency: 13.56 MHz
- Process time: 5 min

### <Example 25>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.08 µm was produced.

Subsequently, a vacuum plasma process was performed under the same conditions as Example 24.

### <Example 26>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NN110A made by AZ Electronic Materials S.A.) to which a catalyst was not added, and then the resultant was dried under the same conditions as Example 21, whereby a polysilazane film with a thickness of 0.025 µm was produced.

Subsequently, a vacuum plasma process was performed under the same conditions as Example 24.

### <Example 27>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NN110A made by AZ Electronic Materials S.A.) to which a catalyst was not added, and then the resultant was dried under the same conditions as Example 21, whereby a polysilazane film with a thickness of 0.025 µm was produced. The resultant film was irradiated with ultraviolet rays (172 nm) under an atmosphere of N₂ (under the ordinary pressure with an oxygen concentration of 0.005% and a relative humidity 0.1%) for 20 minutes by the use of an excimer lamp ("UER-172B", made by Ushio Inc.).

### <Example 28>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.025 µm was produced.

(1) A vacuum plasma process and (2) an ultraviolet irradiation process were performed on the polysilazane film under the following conditions.

### Step (1): Vacuum Plasma Process

- Vacuum plasma processing apparatus: made by U-TEC Corporation
- Gas: Ar
- Gas flow rate: 50 mL/min
- Pressure: 19 Pa
- Temperature: room temperature
- Power: 100 W
- Frequency: 13.56 MHz
- Process time: 5 min

### Step (2): Ultraviolet Irradiation Process

The resultant film was irradiated with ultraviolet rays (172 nm) under an atmosphere of N₂ (under the ordinary pressure with an oxygen concentration of about 0.01% and a relative humidity of about 0.1%) for 20 minutes by the use of an excimer lamp ("UER-172B", made by Ushio Inc.).

### <Example 29>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.08 µm was

### produced.

Subsequently, a vacuum plasma process and an ultraviolet irradiation process were performed under the same conditions as Example 28.

### <Example 30>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NN110A made by AZ Electronic Materials S.A.) to which a catalyst was not added, and then the resultant was dried under the same conditions as Example 21, whereby a polysilazane film with a thickness of 0.025 µm was produced.

Subsequently, a vacuum plasma process and an ultraviolet irradiation process were performed under the same conditions as Example 28.

### <Example 31>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.025 µm was produced.

Subsequently, an atmospheric-pressure plasma process was performed on the polysilazane film under the following conditions.
- Atmospheric-pressure plasma processing apparatus: APT-02 made by Sekisui Chemical Co., Ltd.
- Gas: Ar
- Gas flow rate: 20 L/min
- Pressure: atmospheric pressure
- Temperature: room temperature (23°C)
- Power applied: about 120W
- Power applied per unit area of electrode: 1.3 W/cm²
- Voltage and pulse frequency of DC power source: 80 V and 30 kHz
- Scanning speed: 20 mm/min
- Oxygen concentration: 0.002%
- Relative humidity: 0.1 %RH

### <Example 32>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NN110A made by AZ Electronic Materials S.A.) to which a catalyst was added, and then the resultant was dried under the same conditions as Example 21, whereby a polysilazane film with a thickness of 0. 025 µm was produced. The inside of the system was vacuated to about 10 Pa by the use of a rotary pump and then the resultant film was irradiated with ultraviolet rays (172 nm) for 20 minutes by the use of an excimer lamp ("UER-172VB", made by Ushio Inc.).

### <Example 33>

A polythiourethane substrate for spectacle lenses (MR-7, made by PENTAX RICOH IMAGING Co., Ltd.) with a refractive index of 1.70 was spin-coated (at 3000 rpm for 10 s) with a 10 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.17 µm was produced.

Subsequently, a vacuum plasma process was performed under the same conditions as Example 24.

### <Comparative Example 17>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.025 µm was produced.

### <Comparative Example 18>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.08 µm was produced.

### <Comparative Example 19>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NN110A made by AZ Electronic Materials S.A.) to which a catalyst was not added, and then the resultant was dried under the same conditions as Example 21, whereby a polysilazane film with a thickness of 0.025 µm was produced.

### <Comparative Example 20>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.025 µm was produced.

Subsequently, a heating process was performed on the polysilazane film under the atmosphere of air at 250°C for 1.5 hours.

### <Comparative Example 21>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.08 µm was

### produced.

Subsequently, a heating process was performed in the same way as in Comparative Example 20.

### <Comparative Example 22>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NN110A made by AZ Electronic Materials S.A.) to which a Pd catalyst was not added, and then the resultant was dried under the same conditions as Example 21, whereby a polysilazane film with a thickness of 0.025 µm was produced.

Subsequently, a heating process was performed in the same way as in Comparative Example 20.

### <Comparative Example 23>

A silicon substrate (with a thickness of 530 µm, made by Shin-Etsu Chemical Co., Ltd.) was spin-coated (at 3000 rpm for 10 s) with a 2 wt% xylene (dehydrated) solution of polysilazane (NN110A made by AZ Electronic Materials S.A.) to which a Pd catalyst was added, and then the resultant was dried under the same conditions as Example 21, whereby a polysilazane film with a thickness of 0.025 µm was produced.

The resultant film was irradiated with ultraviolet rays (172 nm) under the atmosphere of air for 20 minutes by the use of an excimer lamp ("UER-172B", made by Ushio Inc.).

### <Comparative Example 24>

A polythiourethane substrate for spectacle lenses (MR-7, made by PENTAX Co., Ltd.) with a refractive index of 1.70was spin-coated (at 3000 rpm for 10 s) with a 10 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.17 µm was produced.

### <Comparative Example 25>

A polythiourethane substrate for spectacle lenses (MR-7, made by PENTAX RICOH IMAGING Co., Ltd.) with a refractive index of 1.70 was spin-coated (at 3000 rpm for 10 s) with a 10 wt% xylene (dehydrated) solution of polysilazane (NL110A made by AZ Electronic Materials S.A.) to which a Pd catalyst was added, and then the resultant was dried under the same conditions as Example 21, whereby a polysilazane film with a thickness of 0.17 µm was produced.

Subsequently, a heating process was performed on the polysilazane film under the atmosphere of air at 250°C for 1.5 hours.

### <Transparency>

Transparency was observed with naked eyes, was compared with the transparency of the substrate, and was evaluated using the following criterion.
○: Equal to transparency of substrate
X: Inferior in transparency to substrate

### <Measurement of Refractive Index>

The refractive index of the film was measured at an incidence angle of 40 to 50 degrees at a light wavelength of 590 nm by the use of an ellipsometer (made by JASCO Corporation).

### <Evaluation of Abrasion resistance (Steel Wool Test)>

The film surface was rubbed by reciprocating ten times with a load of 600 g using steel wool No. 000. Subsequently, abrasions on the film surface were observed with naked eyes. The evaluation criterion was as follows.
○: No abrasion
Δ: Slight abrasions
X: Great abrasions

### <Check of Moiré of Lens>

The resin lenses which were subjected to the processes in the examples and the comparative examples were illuminated with a fluorescent lamp and moirés due to the difference in refractive index from the substrate lens were observed with naked eyes.

### <Measurement of Water vapor transmission rate>

The water vapor transmission rate was measured by the use of a water vapor transmission rate measuring instrument ("PERMATRAN 3/31", made by MOCON Inc.) using an isopiestic method-infrared sensor method under an atmosphere of 40°C and 90 %RH. The lower detection limit of this instrument was 0.01 g/m²·day.

### <Measurement of Oxygen Permeability>

The oxygen permeability was measured by the use of an oxygen permeability measuring instrument ("OX-TRAN2/21", made by MOCON Inc.) using an isopiestic method-electrolytic electrode method under an atmosphere of 23°C and 90 %RH. The lower detection limit of this instrument was 0.01 cc/m²•day,atm.

As shown in Table 3, the films (Examples 21 to 26 and 31) subjected to the plasma process or the films (Examples 27 and 32) subjected to the ultraviolet irradiation process under the atmosphere of nitrogen had a refractive index equal to or more than 1.58, compared with the non-processed films of Comparative Examples 17 and 23.

In the films subjected to both the plasma process and the ultraviolet irradiation process under the atmosphere of nitrogen as Examples 28 to 30, the refractive index increased.

As described in the examples, the refractive index varied between the examples (Examples 21, 24, and 25) in which a catalyst was added and the examples (Examples 23, 26, and 30) in which a catalyst was not added. From this result, it could be seen that it is possible to control the refractive index depending on whether a catalyst is added.

As Examples 24 and 25 of Table 4, no moiré was generated when the plastic for a lens was actually coated with the film. It could be seen that a satisfactory abrasion resistance was exhibited.

The oxygen permeability and the water vapor transmission rate were measured in the coating film on the plastic for a lens of Example 17. As a result, The oxygen permeability was 0.05 cc/m²·day and the water vapor transmission rate was 0.01 g/m²·day, which exhibits a superior gas barrier property.

**Table 3**

| | Catalyst | Thickness | External atmosphere | Oxygen concentration | Relative humidity | Plasma process | | UV ray | | Heating process | Refractive index | Abrasion resistance |
|---|---|---|---|---|---|---|---|---|---|---|---|---|
| | | | | | | Gas species | pressure | (172nm) | | 250°C | n | |
| | | µm | | % | %RH | | Pa | atmosphere | min | hours | - | - |
| Ex21 | Yes | 0.025 | Vacuum | - | - | Ar | 19 | - | - | - | 1.73 | ○ |
| Ex22 | Yes | 0.08 | Vacuum | - | - | Ar | 19 | - | - | - | 1.67 | ○ |
| Ex23 | No | 0.025 | Vacuum | - | - | Ar | 19 | - | - | - | 1.86 | ○ |
| Ex24 | Yes | 0.025 | Vacuum | - | - | N₂ | 19 | - | - | - | 1.74 | ○ |
| Ex25 | Yes | 0.08 | Vacuum | - | - | N₂ | 19 | - | - | - | 1.65 | ○ |
| Ex26 | No | 0.025 | Vacuum | - | - | N₂ | 19 | - | - | - | 1.90 | ○ |
| Ex27 | No | 0.025 | Atmosphere of nitrogen (ordinary pressure) | 0.005 | 0.1 | - | - | N₂ | 20 | - | 1.83 | ○ |
| Ex28 | Yes | 0.025 | Vacuum | - | - | Ar | 19 | N₂ | 20 | - | 1.74 | © |
| Ex29 | Yes | 0.08 | Vacuum | - | - | Ar | 19 | N₂ | 20 | - | 1.75 | © |
| Ex30 | No | 0.025 | Vacuum | - | - | Ar | 19 | N₂ | 20 | - | 2.00 | © |
| Ex31 | Yes | 0.025 | Atmospheric air | 0.002 | 0.1 | Ar | Atmospheric pressure | - | - | - | 1.60 | ○ |
| Ex32 | Yes | 0.025 | Low pressure | 0.01 | 0.01 | - | - | Low pressure | 20 | - | 1.74 | ○ |
| Com Ex17 | Yes | 0.025 | - | - | - | - | - | - | - | - | 1.54 | X |
| Com Ex18 | Yes | 0.08 | - | - | - | - | - | - | - | - | 1.54 | X |
| Com Ex19 | No | 0.025 | - | - | - | - | - | - | - | - | 1.54 | X |
| Com Ex20 | Yes | 0.025 | Atmospheric air | 20 | 1 | - | - | - | - | 1.5 | 1.46 | ○ |
| Com Ex21 | Yes | 0.08 | Atmospheric air | 20 | 1 | - | - | - | - | 1.5 | 1.47 | ○ |
| Com Ex22 | No | 0.025 | Atmospheric air | 20 | 1 | - | - | - | - | 1.5 | 1.47 | ○ |
| Com Ex23 | Yes | 0.025 | Atmospheric air | 20 | 40 | - | - | Air | 20 | - | 1.42 | ○ |

**Table 4**

| | Transparency | Moiré | Abrasion resistance |
|---|---|---|---|
| Example 33 | O | No | O |
| Comparative Example 24 | O | Yes | X |
| Comparative Example 25 | X | Yes | O |

## Claims

1. A multilayered material comprising:
a substrate; and
a silicon-containing film formed on the substrate,
wherein the silicon-containing film has a nitrogen-rich area including "silicon atoms and nitrogen atoms" or "silicon atoms, nitrogen atoms and oxygen atoms", and
wherein the nitrogen-rich area is formed by irradiating a polysilazane film formed on the substrate with an energy beam performed by plasma irradiation or ultraviolet irradiation in an atmosphere, in which the oxygen concentration is equal to or less than 0.5% or the relative humidity is equal to or less than 0.5%, and denaturing at least a part of the polysilazane film and
wherein the composition ratio of the nitrogen atoms to the total atoms, which is measured by X-ray photoelectron spectroscopy and is evaluated by the following formula, in the nitrogen-rich area is 0.1 to 0.5, $composition ratio of nitrogen atoms / \left(composition ratio of silicon atoms+composition ratio of oxygen atoms+composition ratio of nitrogen atoms\right) .$

2. The multilayered material according to claim 1, wherein the 5 nitrogen-rich area has a thickness of 0.01 µm to 0.2 µm.

3. The multilayered material according to claim 1, wherein a working gas used in the plasma irradiation or ultraviolet irradiation is an inert gas, a rare gas, or a reducing gas.

4. The multilayered material according to any one of claims 1 to 3, wherein the substrate is a resin film.

5. The multilayered material according to any one of claims 1 to 4 further comprising a vapor-deposited film on the top surface of the silicon-containing film or between the substrate and the silicon-containing film.

6. The multilayered material according to claim 5, wherein the vapor-deposited film has a thickness of 1 nm to 1000 nm.

7. A method of producing a multilayered material, comprising:
coating a substrate with a polysilazane-containing solution to form a coating film;
drying the coating film under a low-moisture atmosphere to form a polysilazane film; and
irradiating the polysilazane film with an energy beam performed by plasma irradiation or ultraviolet irradiation under an atmosphere, in which the oxygen concentration is equal to or less than 0.5% or the relative humidity is equal to or less than 0.5%, and denaturing at least a part of the polysilazane film to form a silicon-containing film including a nitrogen-rich area including "silicon atoms and nitrogen atoms" or "silicon atoms, nitrogen atoms and oxygen atoms" ,
wherein the composition ratio of the nitrogen atoms to the total atoms, which is measured by X-ray photoelectron spectroscopy and is evaluated by the following formula in the nitrogen-rich area is 0.1 to 0.5, $composition ratio of nitrogen atoms / \left(composition ratio of silicon atoms+composition ratio of oxygen atoms+composition ratio of nitrogen atoms\right) .$

8. The method according to claim 7, wherein a working gas used in the plasma irradiation or ultraviolet irradiation is an inert gas, a rare gas, or a reducing gas.

9. The method according to claim 7 or 8, wherein the substrate is a resin film.

10. The The method according to any one of claims 7 to 9, further comprising a step of forming a vapor-deposited film on the substrate by a physical vapor deposition method (a PVD method) or a chemical vapor deposition method (a CVD method) before the step of forming the polysilazane film on the substrate,
wherein the vapor-deposited film includes as a major component an oxide, a nitride, or an oxynitride of at least one kind of metal selected from the group consisting of Si, Ta, Nb, Al, In, W, Sn, Zn, Ti, Cu, Ce, Ca, Na, B, Pb, Mg, P, Ba, Ge, Li, K, Zr, and Sb.

11. The method according to any one of claims 7 to 9, further comprising a step of forming a vapor-deposited film on the silicon-containing film by a physical vapor deposition method (a PVD method) or a chemical vapor deposition method (a CVD method) after the step of forming the silicon-containing film,
wherein the vapor-deposited film includes as a major component an oxide, a nitride, or an oxynitride of at least one kind of metal selected from the group consisting of Si, Ta, Nb, Al, In, W, Sn, Zn, Ti, Cu, Ce, Ca, Na, B, Pb, Mg, P, Ba, Ge, Li, K, Zr, and Sb.

12. The method according to claim 9 or 10, wherein the vapor-deposited film has a thickness of 1 nm to 1000 nm.

## Patentansprüche

1. Mehrschichtiges Material umfassend:
ein Substrat und
einen auf dem Substrat gebildeten Silizium-haltigen Film,
wobei der Silizium-haltige Film einen stickstoffreichen Bereich einschließlich "Siliziumatomen und Stickstoffatomen" oder "Siliziumatomen, Stickstoffatomen und Sauerstoffatomen" aufweist und
wobei der stickstoffreiche Bereich durch Bestrahlen eines auf dem Substrat gebildeten Polysilazanfilms mit einem Energiestrahl, durchgeführt durch Plasmabestrahlung oder Ultraviolettbestrahlung, in einer Atmosphäre, in der die Sauerstoffkonzentration gleich oder weniger als 0,5% beträgt oder die relative Feuchtigkeit gleich oder weniger als 0,5% beträgt, und Denaturieren von zumindest einem Teil des Polysilazanfilms gebildet wird und
wobei der Zusammensetzungsanteil an den Stickstoffatomen bezogen auf die gesamten Atome, der durch Röntgenphotoelektronenspektroskopie gemessen wird und durch die folgende Formel ausgewertet wird, in dem stickstoffreichen Bereich 0,1 bis 0,5 beträgt, $\begin{matrix}Zusammensetzungsanteil an Stickstoffatomen / \\ ( Zusammensetzungsanteil an Siliziumatomen + \\ Zusammensetzungsanteil an Sauerstoffatomen + \\ Zusammensetzungsanteil an Stickstoffatomen ) .\end{matrix}$

2. Mehrschichtiges Material gemäß Anspruch 1, wobei der stickstoffreiche Bereich eine Dicke von 0,01 µm bis 0,2 µm aufweist.

3. Mehrschichtiges Material gemäß Anspruch 1, wobei ein bei der Plasmabestrahlung oder Ultraviolettbestrahlung verwendetes Arbeitsgas ein Inertgas, ein Edelgas oder ein reduzierendes Gas ist.

4. Mehrschichtiges Material gemäß irgendeinem der Ansprüche 1 bis 3, wobei das Substrat eine Harzfolie ist.

5. Mehrschichtiges Material gemäß irgendeinem der Ansprüche 1 bis 4, das ferner einen aufgedampften Film auf der Oberfläche des Silizium-haltigen Films oder zwischen dem Substrat und dem Silizium-haltigen Film umfasst.

6. Mehrschichtiges Material gemäß Anspruch 5, wobei der aufgedampfte Film eine Dicke von 1 nm bis 1000 nm aufweist.

7. Verfahren zur Herstellung eines mehrschichtigen Materials umfassend:
Beschichten eines Substrats mit einer Polysilazanhaltigen Lösung zur Bildung eines Beschichtungsfilms,
Trocknen des Beschichtungsfilms unter einer Atmosphäre mit geringer Feuchtigkeit zur Bildung eines Polysilazanfilms und
Bestrahlen des Polysilazanfilms mit einem Energiestrahl, durchgeführt durch Plasmabestrahlung oder Ultraviolettbestrahlung, in einer Atmosphäre, in der die Sauerstoffkonzentration gleich oder weniger als 0,5% beträgt oder die relative Feuchtigkeit gleich oder weniger als 0,5% beträgt, und Denaturieren von zumindest einem Teil des Polysilazanfilms zur Bildung eines Silizium-haltigen Films einschließlich eines stickstoffreichen Bereiches, der "Siliziumatome und Stickstoffatome" oder "Siliziumatome, Stickstoffatome und Sauerstoffatome" einschließt,
wobei der Zusammensetzungsanteil an den Stickstoffatomen bezogen auf die gesamten Atome, der durch Röntgenphotoelektronenspektroskopie gemessen wird und durch die folgende Formel ausgewertet wird, in dem stickstoffreichen Bereich 0,1 bis 0,5 beträgt, $\begin{matrix}Zusammensetzungsanteil an Stickstoffatomen / \\ ( Zusammensetzungsanteil an Siliziumatomen + \\ Zusammensetzungsanteil an Sauerstoffatomen + \\ Zusammensetzungsanteil an Stickstoffatomen ) .\end{matrix}$

8. Verfahren gemäß Anspruch 7, worin ein bei der Plasmabestrahlung oder Ultraviolettbestrahlung verwendetes Arbeitsgas ein Inertgas, ein Edelgas oder ein reduzierendes Gas ist.

9. Verfahren gemäß Anspruch 7 oder 8, worin das Substrat eine Harzfolie ist.

10. Verfahren gemäß irgendeinem der Ansprüche 7 bis 9, das ferner einen Schritt zur Bildung eines aufgedampften Films auf dem Substrat durch ein physikalisches Gasphasenabscheidungsverfahren (ein PVD-Verfahren) oder ein chemisches Gasphasenabscheidungsverfahren (ein CVD-Verfahren) vor dem Schritt zur Bildung des Polysilazanfilms auf dem Substrat umfasst,
wobei der aufgedampfte Film als Hauptkomponente ein Oxid, ein Nitrid oder ein Oxynitrid aus mindestens einer Art eines Metalls, ausgewählt aus der Gruppe bestehend aus Si, Ta, Nb, Al, In, W, Sn, Zn, Ti, Cu, Ce, Ca, Na, B, Pb, Mg, P, Ba, Ge, Li, K, Zr und Sb, einschließt.

11. Verfahren gemäß mindestens einem der Ansprüche 7 bis 9, das ferner einen Schritt zur Bildung eines aufgedampften Films auf dem Silizium-haltigen Film durch ein physikalisches Gasphasenabscheidungsverfahren (ein PVD-Verfahren) oder ein chemisches Gasphasenabscheidungsverfahren (ein CVD-Verfahren) nach dem Schritt zur Bildung des Polysilazanfilms auf dem Substrat umfasst,
wobei der aufgedampfte Film als Hauptkomponente ein Oxid, ein Nitrid oder ein Oxynitrid aus mindestens einer Art eines Metalls, ausgewählt aus der Gruppe bestehend aus Si, Ta, Nb, Al, In, W, Sn, Zn, Ti, Cu, Ce, Ca, Na, B, Pb, Mg, P, Ba, Ge, Li, K, Zr und Sb, einschließt.

12. Verfahren gemäß Anspruch 9 oder 10, worin der aufgedampfte Film eine Dicke von 1 nm bis 1000 nm aufweist.

## Revendications

1. Matériau multicouche comprenant :
un substrat ; et
un film contenant du silicium formé sur le substrat,
dans lequel le film contenant du silicium a une zone riche en azote incluant « des atomes de silicium et des atomes d'azote » ou « des atomes de silicium, des atomes d'azote et des atomes d'oxygène », et
dans lequel la zone riche en azote est formée en irradiant un film de polysilazane formé sur le substrat avec un faisceau d'énergie, effectuée par irradiation au plasma ou irradiation aux ultraviolets dans une atmosphère, dans laquelle la concentration en oxygène est égale ou inférieure à 0,5% ou bien l'humidité relative est égale ou inférieure à 0,5%, et en dénaturant au moins une partie du film de polysilazane et
dans lequel le rapport de composition des atomes d'azote sur les atomes totaux, qui est mesuré par spectroscopie de photoélectrons induits par rayons X et est évalué par la formule suivante, dans la zone riche en azote est 0,1 à 0,5, $rapport de composition dʹatomes dʹazote / \left(rapport de compositon dʹatomes de silicium+rapport de composition dʹatomes dʹoxygène+rapport de composition dʹatomes dʹazote\right) .$

2. Matériau multicouche selon la revendication 1, dans lequel la zone riche en azote a une épaisseur de 0,01 µm à 0,2 µm.

3. Matériau multicouche selon la revendication 1, dans lequel un gaz de travail utilisé dans l'irradiation au plasma ou l'irradiation aux ultraviolets est un gaz inerte, un gaz rare, ou un gaz réducteur.

4. Matériau multicouche selon l'une quelconque des revendications 1 à 3, dans lequel le substrat est un film de résine.

5. Matériau multicouche selon l'une quelconque des revendications 1 à 4, comprenant en outre un film déposé en phase vapeur sur la surface supérieure du film contenant du silicium ou entre le substrat et le film contenant du silicium.

6. Matériau multicouche selon la revendication 5, dans lequel le film déposé en phase vapeur a une épaisseur de 1 nm à 1 000 nm.

7. Procédé de production d'un matériau multicouche, comprenant :
le revêtement d'un substrat avec une solution contenant du polysilazane pour former un film de revêtement ;
le séchage du film de revêtement sous une atmosphère basse humidité pour former un film de polysilazane ; et
l'irradiation du film de polysilazane avec un faisceau d'énergie effectuée par irradiation au plasma ou irradiation aux ultraviolets sous une atmosphère, dans laquelle la concentration en oxygène est égale ou inférieure à 0,5% ou bien l'humidité relative est égale ou inférieure à 0,5%, et la dénaturation d'au moins une partie du film de polysilazane pour former un film contenant du silicium incluant une zone riche en azote incluant « des atomes de silicium et des atomes d'azote » ou « des atomes de silicium, des atomes d'azote et des atomes d'oxygène »,
dans lequel le rapport de composition des atomes d'azote sur les atomes totaux, qui est mesuré par spectroscopie de photoélectrons induits par rayons X et est évalué par la formule suivante, dans la zone riche en azote est 0,1 à 0,5, $rapport de composition dʹatomes dʹazote / \left(rapport de compositon dʹatomes de silicium+rapport de composition dʹatomes dʹoxygène+rapport de composition dʹatomes dʹazote\right) .$

8. Procédé selon la revendication 7, dans lequel un gaz de travail utilisé dans l'irradiation au plasma ou l'irradiation aux ultraviolets est un gaz inerte, un gaz rare, ou un gaz réducteur.

9. Procédé selon la revendication 7 ou 8, dans lequel le substrat est un film de résine.

10. Procédé selon l'une quelconque des revendications 7 à 9, comprenant en outre une étape de formation d'un film déposé en phase vapeur sur le substrat par un procédé de dépôt physique en phase vapeur (un procédé PVD) ou un procédé de dépôt chimique en phase vapeur (un procédé CVD) avant l'étape de formation du film de polysilazane sur le substrat,
dans lequel le film déposé en phase vapeur inclut comme un composant principal un oxyde, un nitrure, ou un oxynitrure d'au moins une espèce de métal choisie parmi le groupe consistant en Si, Ta, Nb, Al, In, W, Sn, Zn, Ti, Cu, Ce, Ca, Na, B, Pb, Mg, P, Ba, Ge, Li, K, Zr, et Sb.

11. Procédé selon l'une quelconque des revendications 7 à 9, comprenant en outre une étape de formation d'un film déposé en phase vapeur sur le film contenant du silicium par un procédé de dépôt physique en phase vapeur (un procédé PVD) ou un procédé de dépôt chimique en phase vapeur (un procédé CVD) après l'étape de formation du film contenant du silicium,
dans lequel le film déposé en phase vapeur inclut comme un composant principal un oxyde, un nitrure, ou un oxynitrure d'au moins une espèce de métal choisie parmi le groupe consistant en Si, Ta, Nb, Al, In, W, Sn, Zn, Ti, Cu, Ce, Ca, Na, B, Pb, Mg, P, Ba, Ge, Li, K, Zr, et Sb.

12. Procédé selon la revendication 9 ou 10, dans lequel le film déposé en phase vapeur a une épaisseur de 1 nm à 1 000 nm.
